(19) Europäisches Patentamt / European Patent Office / Office européen des brevets

(11) **EP 1 615 385 B1**

(12) **EUROPEAN PATENT SPECIFICATION**

(45) Date of publication and mention
of the grant of the patent:
**18.03.2009  Bulletin 2009/12**

(51) Int Cl.:
*H04L 12/28* (2006.01)     *H04L 1/18* (2006.01)

(21) Application number: **05020443.7**

(22) Date of filing: **21.06.2002**

(54) **Method for carrying out communications among plural stations**

Verfahren zur Durchführung der Kommunikation unter mehreren Stationen

Procédé d'établissement de communications entre une pluralité de stations

(84) Designated Contracting States:
**DE FR GB**

(30) Priority: **22.06.2001   JP 2001189232**

(43) Date of publication of application:
**11.01.2006   Bulletin 2006/02**

(60) Divisional application:
**09151665.8**

(62) Document number(s) of the earlier application(s) in
accordance with Art. 76 EPC:
**02013786.5 / 1 271 850**

(73) Proprietor: **Panasonic Corporation
Kadoma-shi
Osaka 571-8501 (JP)**

(72) Inventors:
• **Ohmi, Shinichiro
  Toyono-gun
  Osaka-fu (JP)**
• **Harada, Yasuo,
  Matsushita Electr. Ind. Co., Ltd.
  3-7,Shiromi 1-chome, Chuo-ku (JP)**
• **Ando, Kazuhiro
  Hirakata-shi
  Osaka-fu (JP)**

(74) Representative: **Ehlers, Jochen
  Eisenführ, Speiser & Partner,
  Martinistrasse 24
  28195 Bremen (DE)**

(56) References cited:
**EP-A- 0 768 806          EP-A- 0 818 905
EP-A- 0 899 920**

**Description**

BACKGROUND OF THE INVENTION

Field of the Invention

The present invention relates to communications methods and, more specifically, to a communications method for streaming video or others through a wireless network.

Description of the Background Art

Conventionally, for data exchanges between personal computers (PCs) or between a host computer and a PC, a wired network has been used, such as Ethernet specified in IEEE 802.3. In addition, a wireless network as specified in IEEE 802.11 has also come in use in recent years.

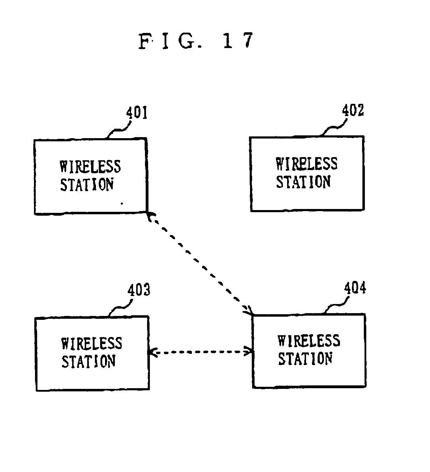

With reference to FIGS. 17 to 20, described below are transmission schemes on a wireless network, which are specified in IEEE 802.11. IEEE 802.11 specifies two schemes: One is a scheme for communications by polling access carried out on a network having a control station for controlling communications between wireless stations, and the other is a scheme for communications by random access carried out on a network where no control station is provided and wireless stations obtain permission for communications by themselves.

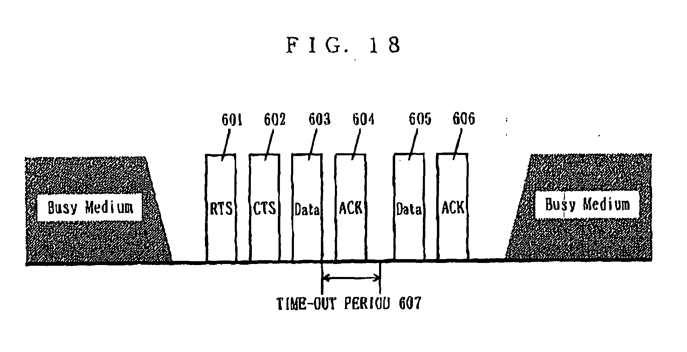

FIG. 17 is a block diagram illustrating a conventional network configured by wireless stations without any control station. FIG. 18 is a timing chart showing a conventional communications scheme by random access carried out on the network of FIG. 17. In IEEE 802.11, the communications scheme is specified as a DCF (distributed coordination function) procedure. Hereinafter, described is an example of the DCF procedure, where data is transmitted from a wireless station 401 to a wireless station 404.

First, a data transmitting station having data to be sent (wireless station 401) checks to see whether a wireless channel is in use. If not in use, a data receiving station (wireless station 404) sends, after a random time interval, an RTS (request to send) packet 601 to the data receiving station (wireless station 404) for requesting for permission to send data. The RTS packet 601 is sent after a random interval in order to avoid conflicts of RTS packets simultaneously coming from plural stations.

On receiving the RTS packet 601, the data receiving station (wireless station 404) sends a CTS (clear to send) packet 602 for permitting the data transmitting station to send data. On receiving the CTS packet 602, the data transmitting station (wireless station 401) sends a Data packet 603. If the Data packet 603 has been successfully received, the data receiving station (wireless station 404) sends an ACK (acknowledgement) packet 604 for acknowledging receipt, thereby reporting to the data transmitting station (wireless station 401) that the data has been successfully received.

If the Data packet 603 has an error, the ACK packet 604 is not sent from the data receiving station (wireless station 404). After waiting for a time-out period 607 to receive the ACK packet 604 but in vain, the data transmitting station (wireless station 401) re-sands a Data packet 605 identical to the Data packet 603. If the Data packet 605 has been successfully received, the data receiving station (wireless station 404) sends an ACK packet 606. If the ACK packet 606 has been successfully received, the data transmitting station (wireless station 401) ends the access.

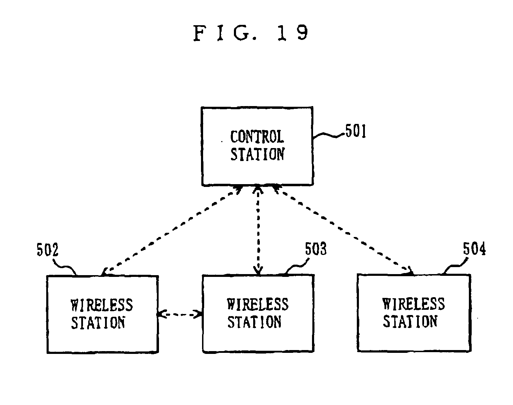

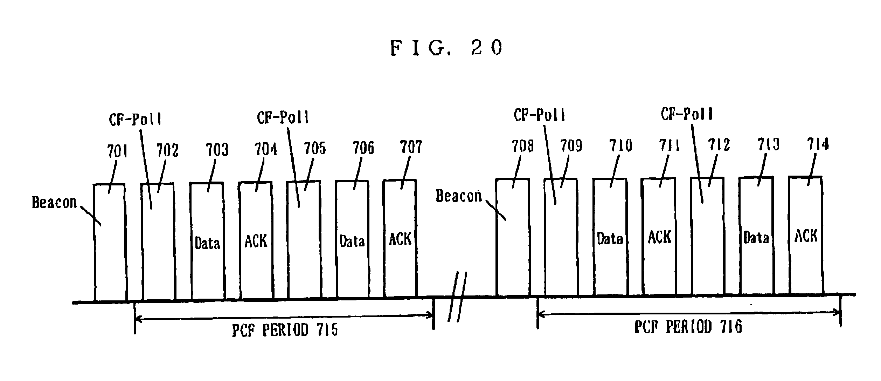

FIG. 19 is a block diagram illustrating another conventional network configured by a control station and a wireless station. FIG. 20 is a timing chart showing a conventional communications scheme by polling access. In IEEE 802.11, the communications scheme by polling access is specified as a PCF (point coordination function) procedure. Hereinafter, described is an example of the PCF procedure, where a wireless station 502 sends data to a control station 501, then the control station 501 does to a wireless station 503, then a wireless station 504 does to the control station 501, and then a wireless station 502 does to the wireless station 503.

First, the control station 501 sets a PCF period 715 by sending a Beacon packet 701. After the PCF period is set, all wireless stations 502 to 504 cannot send packets unless the control station 501 permits them to do so.

When the PCF period 715 is started, the control station 501 first sends a CF-Poll packet 702 to the wireless station 502. After a predetermined time has passed, the control station 501 sends a CF-Poll packet 705 to the wireless station 503. The CF-Poll packet is a packet for permitting a specific wireless station to send packets. The CF-Poll packet 702 provides the wireless station 502 with permission for packet transmission in the first half of the PCF period 715, and the CF-Poll packet 705 provides the wireless station 503 with permission for packet transmission in the second half thereof.

The data transmitting station (wireless station 502) permitted by the CF-Poll packet 702 sends a Data packet 703. If the Data packet 703 has been successfully received, the data receiving station (control station 501) sends an ACK (acknowledgment) packet 704 for reporting to the data transmitting station (wireless station 502) that the data has been successfully received, and then ends the access.

Next, the data transmitting station (control station 501) sends a Data packet 706. If the Data packet 706 has been successfully received, the data receiving station (wireless station 503) permitted by the CF-Poll packet 705 sends an ACK (acknowledgement) packet 707 for reporting to the data transmitting station that the data has been successfully received, and then ends the access.

When the PCF period 715 has passed, the control station 501 suspends CF-Poll packet transmission. Then, after a predetermined time has passed, the control station 501 sends a Beacon packet 708 for setting a next PCF period 716. Then, the wireless station 504 is provided with permission for packet transmission in the first half of the PCF period 716, while the wireless station 502 in the second half thereof. Then, Data packets 710 and 713 are sent, and then ACK packets 711 and 714 are sent for acknowledgement in a manner similar to the above.

Note that, in the above examples, two wireless stations are provided with permission for packet transmission in a single PCF period. However, only a single, or three or more wireless stations may be provided with such permission.

In the above-described conventional communications scheme. PCs can be connected to each other via a wireless network for data exchange.

In recent years, not only PCs, but also a set-top box or a video player, and a television set are connected to each other via a wireless network for streaming video or others. For this purpose, a large amount of data has to be sent at high speed on a real-time basis by using a limited band. Therefore, unlike conventional burst-like data exchange between PCs, high transmission efficiency has to be achieved.

However, in the conventional communications schemes as those in IEEE 802.11, video streaming via a wireless network is not anticipated. Therefore, the transmission efficiency cannot be sufficiently increased.

EP 0 768 806 relates to a data protocol for transport of ATM cells over a wireless link. A reliable data link layer protocol to transport ATM cells over a wireless point-to-point link is disclosed. The protocol ensures that the cells are transported reliably by use of a sliding window transport mechanism with selective repeat, automatic repeat request and forward error correction. The protocol minimizes header overhead by means of header compression and provides per-cell forward error correction whose size can be changed adaptively. The protocol also provides parity cells for recovery from errors that cannot be corrected using the per-cell forward error correction field. The number of these cells as well as the size of a window or a frame-can also be adaptively changed. In addition, the window can be terminated to request an immediate acknowledgement.

EP 0 899 920 discloses a radio communication system and a corresponding method. Accordingly, the information data is transferred by TDMA in one frame. A frame is formed of a control-data transfer time region and an information-data transfer time region. In the control-data transfer time region, polling is performed for each terminal and a transfer rate and whether transfer data exists are returned to a control station as an ACK. The control station assigns a channel to each terminal according to this information. A time period for data transfer in the information-data transfer time region is assigned to each terminal which has made a transmission request. In the region, asynchronous data and isochronous data can be transferred together. Since data is transferred in the time period assigned in advance in a frame, a constant transfer rate is obtained without being affected by an increase or decrease of traffic.

EP 0 818 905 relates to a network communication system with a medium reservation concept. The medium reservation is done in a hierarchical fashion where first the shared medium is reserved for two stations called the participants. All other stations called observers stay quiet during the time reserved for the participants. In this fashion, a shared medium can be reserved for a subset of the plurality of devices. During this period called the reserved period, a master, and a slave station attribute can be given to the participating devices and the medium can be shared using another medium coordination algorithm which is not necessarily the same as the one used to reserve the medium for a reserved period in the first place.

EP 0 328 100 A2 discloses a high troughput communication method for a digital mobile station when crossing a zone boundary during a session. The disclosed system relates to a situation in which e.g. a mobile in the service zone of a first base station transmits a reconnect request packet to a second base station when leaving the service zone of the first and entering the service zone of the second during a session with the first base station. The second base station communicates the receipt of the reconnect request packet to the central station, from which a proceed-to-clear command packet is sent to the first base station to allow it clear the connection with the mobile station and return a clear response packet to the central station informing it if a serial number of the last data packet it has received from the mobile station immediately before leaving its service zone. On receiving the clear response packet, the central station sends a reconnect command packet indicating that serial number to the second base station to cause it to issue a reconnect response packet to the mobile station requesting the reconnect. The reconnect response packet communicates the serial number of the last packet to the mobile station to allow it to send a copy of data packets which may have been interrupted during the session with the first base station.

SUMMARY OF THE INVENTION

Therefore, an object of the present invention is to provide a communications scheme for achieving high transmission efficiency, thereby enabling high-speed streaming of video or others via a wireless network.

The present invention has the following features to attain the object mentioned above.

According to the present invention, a communications method is provided for carrying out communications among plural stations by using a single wireless channel which is shared by the plural stations in a time-division manner, the method comprising: a step, carried out by a pair of stations included in the plural stations that has data to be sent and received, of determining whether the wireless channel is in use; a step, carried out by the pair of stations, of obtaining, when the wireless channel is not in use, permission for the communications via the wireless channel in a specific time period P, and serving as a transmitting station and a receiving station; a step, carried out by the transmitting station, of calculating the number of data packets transmittable in the specified time period P; a step, carried out by the transmitting station, of successively sending to the receiving station a series of data packets not more than the calculated number of data packets; a step, carried out by the receiving station, of starting reception of the series of data packets coming from the transmitting station; a step, carried out by the receiving station, of sending a response packet to the transmitting station when completing the reception of the series of data packets; and a step, carried out by the transmitting station and the receiving station when determining that no data to be transmitted has been left in the transmitting station, of withdrawing the permission for the communications provided to the transmitting station and the receiving station even before the specified time period P passes, wherein the transmitting station sends the series of data packet at intervals of a non-transmission time a, and when detecting a non-transmission time β longer than the non-transmission time a, the receiving station determines that the series of data packets has been received.

According to a preferred embodiment, the transmitting station sends a response request packet to the receiving station after the series of data packets has been sent, and the receiving station determines, based on the response request packet received from the transmitting station, that the series of data packets has been received.

Within this preferred embodiment, after transmitting the response packet and when detecting a non-transmission time γ longer than the non-transmission time a, preferably the receiving station determines that no data to be transmitted has been left in the transmitting station, and withdraws the permission for the communications provided to the receiving station.

In a preferred embodiment of the invention, the method includes after transmitting the response packet and when detecting a non-transmission time γ longer than the non-transmission time β, the receiving station determines that no data to be transmitted has been left in the transmitting station, and withdraws the permission for the communications provided to the receiving station.

According to another aspect a method for carrying out communications among plural stations by using a single wireless channel in a time-division manner is provided, wherein any one of the plural stations serves as a control station for controlling the communications among the plural stations, the method including:

a step, carried out by the control station, of selecting a pair of stations from the plural stations as a transmitting station and a receiving station, and providing the pair of stations with permission for the communications using the wireless channel in a specified time period P;
a step, carried out by the transmitting station, of calculating the number of data packets transmittable in the specified time period P;
a step, carried out by the transmitting station, of successively sending a series of data packets not more than the calculated number of data packets;
a step, carried out by the receiving station, of starting reception of the series of data packets coming from the transmitting station; and
a step, carried out by the receiving station, of sending a response packet to the transmitting station when completing the reception of the series of data packets.

According to this aspect, any one of stations serves as a control station. The control station selects a pair of a transmitting station and a receiving station, and provides permission for communications carried out in a predetermined time period P. Then, the transmitting station successively sends a series of data packets in the specified time period P. On receiving the series of data packets, the receiving station sends a response packet. Thus, compared with a case where a response packet is sent for every data packet received, the number of response packets sent per unit time can be reduced. This reduction can increase the number of data packets to be sent, and therefore can achieve higher transmission efficiency.

According to another aspect, the communications method further includes a step, carried out by the control station when determining that no data to be transmitted has been left in the transmitting station, of withdrawing the permission for the communications provided to the transmitting station and the receiving station even before the specified time period P passes.

According to this aspect, if the pair of stations provided with permission for communications has completed communications before the specified time period P passes, the control station forcefully terminates the permission for communications. Therefore, the next pair of stations can be moved up for permission for starting communications. This makes data transfer more efficient.

According to another aspect, the communications method further includes a step, carried out by the control station, of sending the pair of stations a report packet containing permission for the communications and the specified time period P;

a step, carried out by the transmitting station, of receiving the report packet coming from the control station, wherein the calculating step and the data-packet sending step are carried out based on contents of the report packet;

a step carried out by the receiving station, of receiving the report packet coming from the control station, wherein the data-packet receiving step and the response-packet sending step are carried out based on the contents of the report packet.

According to this aspect, the provided permission for communications and the specified time period P are sent via a report packet form the control station to the pair of stations. Thus, the control station can make the pair of stations to communicate with each other using the wireless channel in the specified time period P.

According to another aspect, the communications method further includes :

a step, carried out by the transmitting station, of sending a response request packet to the receiving station after the series of data packets has been sent; and

a step, carried out by the receiving station, of determining, based on the response request packet received from the transmitting station, that the series of data packets has been received.

According to this aspect, the transmitting station sends the series of data packets, and then a response request packet. On receiving the response request packet, the receiving station determines that the series of data packets has been received, and sends a response packet.

According to another aspect,

in the data-packet sending step and the response-request-packet sending step, the transmitting station sends the series of data packets and the response request packet at intervals of a non-transmission time $\alpha$, and

in the permission withdrawing step, when detecting a non-transmission time $\gamma$ longer than the non-transmission time $\alpha$, the control station withdraws the permission for the communications provided to the pair of stations.

According to this aspect, by detecting the non-transmission period $\gamma$ longer than the non-transmission period $\alpha$, the control station determines that no data to be transmitted has been left in the transmitting station, and withdraws the permission for communications.

According to another aspect,

in the data-packet sending step, the transmitting station sends the series of data packets at intervals of a non-transmission time $\alpha$, and

the method further includes a step, carried out by the receiving station, of determining, when detecting a non-transmission time $\beta$ longer than the non-transmission time $\alpha$, that the series of data packets has been received.

According to this aspect, by detecting the non-transmission period $\beta$ longer than the non-transmission period $\alpha$, the receiving station determines that the series of data packets has been received, and sends a response packet.

According to another aspect, in the sixth aspect, the communications method further includes

a step, carried out by the control station when detecting a non-transmission time $\gamma$ longer than a non-transmission time $\beta$, of determining that no data to be transmitted has been left in the transmitting station, and withdrawing the permission for the communications provided to the pair of stations.

According to this aspect, by detecting the non-transmission period $\gamma$ longer than the non-transmission period $\beta$, the control station determines that no data to be transmitted has been left in the transmitting station, and withdraws the permission for communications.

According to another aspect,

in the selecting step, the control station selects the pair of stations by referring to a polling list having plural pairs of wireless stations registered therein.

According to this aspect, plural wireless stations desiring to communicate with one another are registered in a polling list. The control station refers to the polling list to select one pair, and provides permission for communications.

According to another aspect,

in the selecting step, the control station selects the pair of stations based on a priority level assigned to each of the pairs of wireless stations registered in the polling list.

According to this aspect, each pair is assigned a priority level. The control station determines one pair based on the priority level.

According to another aspect,

the response packet sent by the receiving station contains a state of reception of a series of data packets received before the report packet was received.

According to this aspect, the response packet contains the state of reception of the series of data packets received before the report packet comes. Therefore, if any data packet has an reception error, the transmitting station can re-send the data packet when provided with permission for communications next.

Another aspect of the present invention is directed to a method for carrying out communications among plural stations by using a single wireless channel in a time-division manner, and the method includes:

a step, carried out by a pair of stations included in the plural stations that has data to be sent and received, of determining whether the wireless channel is in use;
a step, carried out by the pair of stations, of obtaining, when the wireless channel is not in use, permission for the communications via the wireless channel in a specific time period P, and serving as the transmitting station and the receiving station;
a step, carried out by the transmitting station, of calculating the number of data packets transmittable in the specified time period P;
a step, carried out by the transmitting station, of successively sending a series of data packets not more than the calculated number of data packets;
a step, carried out by the receiving station, of starting reception of the series of data packets coming from the transmitting station; and
a step, carried out by the receiving station, of sending a response packet to the transmitting station when completing the reception of the series of data packets.

According to this aspect, the stations having data to be sent and received determines whether the wireless channel should be used. If not in use, they obtain permission for communications in the specified time period P, serving as a transmitting station and a receiving station. Thereafter, the transmitting station successively sends a series of data packets in the specified time period P. The receiving station receives the series of data packets, and then sends a response packet. Thus, compared with a case where a response packet is sent for every data packet received, the number of response packets sent per unit time can be reduced. This reduction can increase the number of data packets to be sent, and therefore can achieve high transmission efficiency.

According to another aspect, the communications method further includes
a step, carried out by the transmitting station and receiving station when determining that no data to be transmitted has been left in the transmitting station, of withdrawing the permission for the communications provided to the transmitting station and the receiving station even before the specified time period P passes.

According to this aspect, if the transmitting station and the receiving station have completed communications before the specified time period P passes, the permission provided to these stations for communications is forcefully terminated. Thus, Other transmitting station and receiving station can be moved up for permission for starting communications. This makes data transfer more efficient.

According to another aspect, the communications method further includes:

a step, carried out by the transmitting station, of sending, when it is determined in the determining step that the wireless channel is not in use, a request packet to the receiving station after a random time passes;
a step, carried out by the receiving station, of sending a permission packet to the transmitting station in receipt of the request packet from the transmitting station; and
a step, carried out by the transmitting station, of obtaining permission.for the communications by receiving the permission packet from the receiving station, and sending the receiving station a report packet containing the permission for the communications and the specified time period P.

According to this aspect, when the wireless channel is not in use, the transmitting station sends a request packet to the receiving station after a random time has passed. In response to the request packet from the transmitting station, the receiving station sends a respond packet. By receiving the response packet from the receiving station, the transmitting station obtains permission for the communications, and sends a report packet to the receiving station.

According to another aspect, the communicatlon method further includes:

a step, carried out by the transmitting station, of sending, when it is determined in the determining step that the wireless channel is not in use, a request packet to the receiving station after a random time passes; and
a step, carried out by the receiving station, of obtaining the permission for the communications by receiving the request packet from the transmitting station, and sending the receiving station a report packet containing the permission for the communications and the specified time period P.

According to this aspect, when the wireless channel is not in use, the transmitting station sends a request packet to the receiving station after a random time has passed. By receiving the request packet from the transmitting station, the receiving station obtains permission for the communications, and sends a report packet to the transmitting station.

According to another aspect, the communications method further includes:

a step, carried out by the transmitting station, of sending a response request packet to the receiving station after the series of data packets has been sent; and

a step, carried out by the receiving station, of determining, based on the response request packet received from the transmitting station, that the series of data packets has been received.

According to this aspect, the transmitting station sends a series of data packets, and then a response request packet. On receiving the response request packet, the receiving station determines that the series of data packets has been received, and sends a response packet.

According to another aspect, in the withdrawing step, after transmitting the response packet and when detecting a non-transmission time $\gamma$ longer than the non-transmission time $\alpha$, the receiving station determines that no data to be transmitted has been left in the transmitting station and withdraws the permission for the communications provided to the receiving station.

According to another aspect,

in the data-packet sending step, the transmitting station sends the series of data packets at intervals of a non-transmission time $\alpha$, and

the method further includes a step, carried out by the receiving station, of determining, when detecting a non-transmission time $\beta$ longer than the non-transmission time $\alpha$, that the series of data packets has been received.

According to this aspect, the transmitting station sends a series of data packets at intervals of non-transmission time period $\alpha$. When detecting the non-transmission time $\beta$ longer than the non-transmission time $\alpha$, the receiving station determines that the series of data packets has been received, and sends a response packet.

According to another aspect, in the withdrawing step, after transmitting the response packet and when detecting a non-transmission time $\gamma$ longer than the non-transmission time $\beta$, the receiving station determines that no data to be transmitted has been left in the transmitting station, and withdraws the permission for the communications provided to the receiving station.

Another aspect of the present invention is directed to a report packet used in a communications method for carrying out communications among plural stations using a single wireless channel in a time-division manner, the method for selecting a pair of stations from the plural stations and providing the selected pair with permission for the communications using the wireless communications in a specific time period, the report packet for reporting the provided permission to the selected pair of stations, and the report packet includes:

identifiers of the selected stations;

the specific time period; and

the permission provided to the pair of stations for communications via the wireless channel in the specific time period.

By sending the report packet according to this aspect to the pair of stations, the pair of stations can know the provided permission for communication and the specified time period P. Thus, the pair of stations can communicate with each other by using a wireless channel in the specified time period P.

Another aspect of the present invention is directed to a response packet used in a communications method for carrying out communications among plural stations using a single wireless channel in a time-division manner, the method for selecting a pair of stations from the plural stations as a transmitting station and a receiving station and providing the selected pair with permission for the communications using the wireless communications in a specific time period, the response packet sent from the receiving station to the transmitting station after a report packet for reporting the permission for the communications to the transmitting station and the receiving station is sent and then the series of data packets are sent from the transmitting station to the receiving station, and the response packet includes:

an identifier of the transmitting station; and

a state of reception of the series of data packets received before the receiving station receives the report packet.

The acknowledge packet according to this aspect contains the state of reception of the series of data packets received by the receiving station before the report packet comes. If any data packet has a reception error, the transmitting station can re-send the data packet when provided with permission for communication.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is a block diagram illustrating the configuration of a wireless network system according to first and third embodiments of the present invention;

FIG. 2 is a block diagram illustrating an example of configuration of a control station 1 and wireless stations 2 to 4 of FIG. 1;

FIG. 3 shows memory maps illustrating (a) the contents of ROM incorporated in the control station 1 of FIG. 1, and (b) the contents of ROM incorporated in each of the wireless stations 2 to 4 of FIG. 1;

FIG. 4 is a flowchart showing a polling process carried out by the control station 1 of FIG. 1;

FIG. 5 is a diagram illustrating an example of a polling list to be referred to by the control station 1 of FIG. 1;

FIG. 6 is an illustration showing an example of structure of a CF-Multipoll packet;

FIG. 7 is an illustration showing an example of structure of a DelayAck packet;

FIG. 8 is a flowchart showing a communications process carried out by each of the wireless stations 1 to 4 of FIG. 1;

FIG. 9 is a flowchart showing the detail of step S201 of FIG. 8;

FIG. 10 is a timing chart showing an example of wireless communications carried out in a polling access period in the system of FIG. 1;

FIG. 11 is a timing chart illustrating an example of wireless communications carried out in a random access period in the system of FIG. 1;

FIG. 12 is a block diagram illustrating the configuration of a wireless communications system according to a second embodiment of the present invention;

FIG. 13 is a flowchart showing a communications process carried out by each of the wireless stations 1 to 4 of FIG. 1 in the third embodiment;

FIG. 14 is a flowchart showing the details of step S201 of FIG. 13;

FIG. 15 is a timing chart showing an example of wireless communications carried out in the polling access period in the system of FIG. 1 (third embodiment);

FIG. 16 is a timing chart illustrating an example of wireless communications carried out in the random access period in the system of FIG. 1 (third embodiment);

FIG. 17 is a block diagram illustrating a conventional network configured by wireless stations without any control station;

FIG. 18 is a timing chart showing a conventional communications scheme by random access carried out on a network of FIG. 17;

FIG. 19 is a block diagram illustrating another conventional network configured by a control station and wireless stations; and

FIG. 20 is a timing chart showing a conventional communications scheme by polling access carried out on the network of FIG. 19.

DESCRIPTION OF THE PREFERRED EMBODIMENTS

Hereinafter described in detail are embodiments of the present invention with reference to the drawings.

(First embodiment)

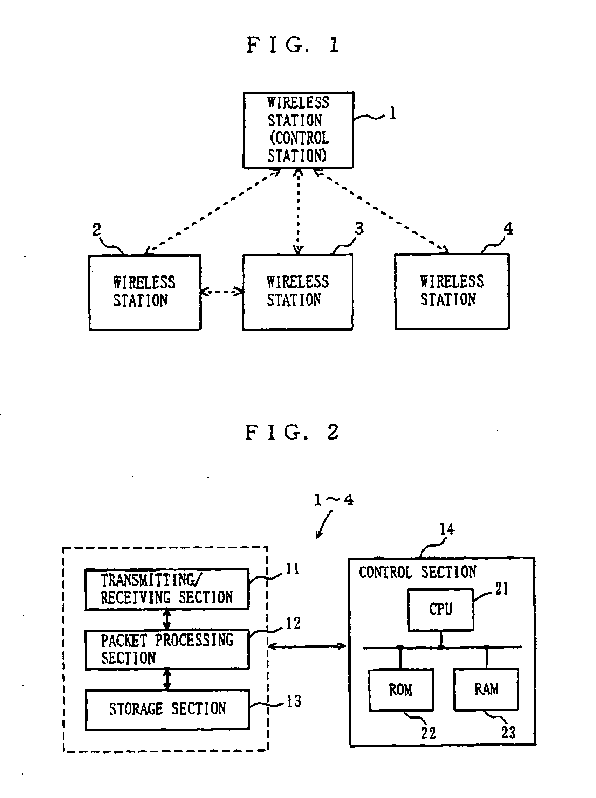

FIG. 1 is a block diagram illustrating the configuration of a wireless network system according to a first embodiment of the present invention. In FIG. 1, the wireless network system is configured by four wireless stations 1 to 4 for carrying out wireless communications with one another. One of these wireless stations 1 to 4 is capable of not only carrying out wireless communications but also controlling communications among the wireless stations 1 to 4, including itself. Such wireless station is hereinafter assumed to be the wireless station 1, and is called "control station 1" if required to be distinguished from the other wireless stations 2 to 4.

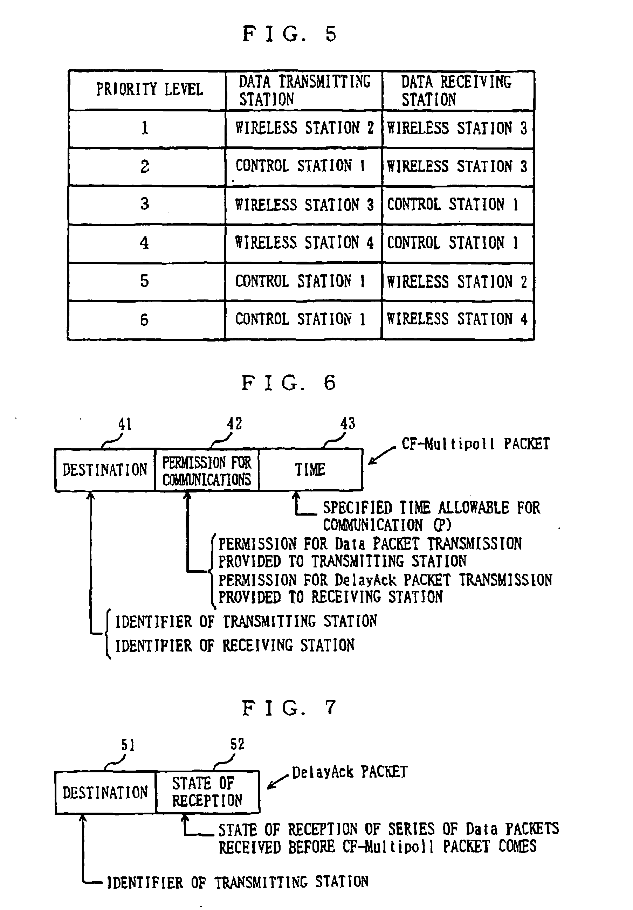

FIG. 2 is a block diagram illustrating an example of configuration of each of the wireless stations 1 to 4 of FIG. 1. In FIG. 2, each of the wireless stations 1 to 4 includes a transmitting/receiving section 11, a packet processing section 12, a storage section 13, and a control section 14. The storage section 13 stores data. In the control station (wireless station 1), the storage section 13 further stores a polling list (refer to FIG. 5; will be described later).

The transmitting/receiving section 11 transmits and receives packets. The packet processing section 12 carries out processes such as packeting data to be sent, unpacketing received packet for data extraction, etc. The control section 14 includes a CPU 21, ROM 22, and RAM 23 for controlling each of the above components.

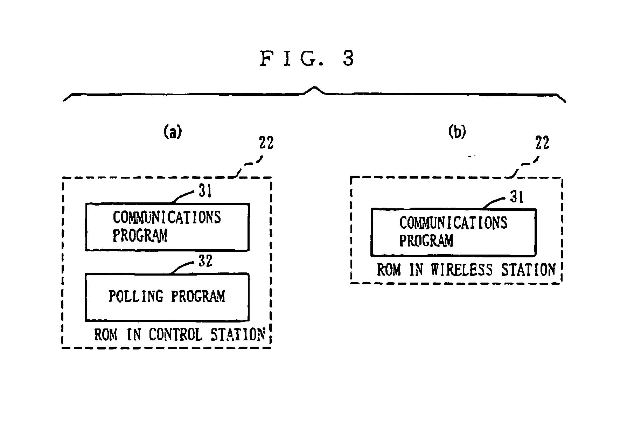

In FIG. 3, (a) is a memory map illustrating the contents of the ROM incorporated in the control station 1 of FIG.

1, and (b) is a memory map illustrating the contents of the ROM incorporated in each of the wireless stations 2 to 4 of FIG. 1. In (a) of FIG. 3, the ROM of the control station 1 stores a communications program 31 and a polling program 32. In (b) of FIG. 3, the ROM of each wireless station stores the communications program 31.

With the CPU using the RAM as a working area, the control section 14 of each of the control station 1 and the wireless stations 2 to 4 operates by following the program 31 stored in the ROM shown in (b) of FIG. 3 (and, for the control section 14 of the control station 1, also the program 32 stored in the ROM shown in (b) of FIG. 3) for carrying out processes as described below.

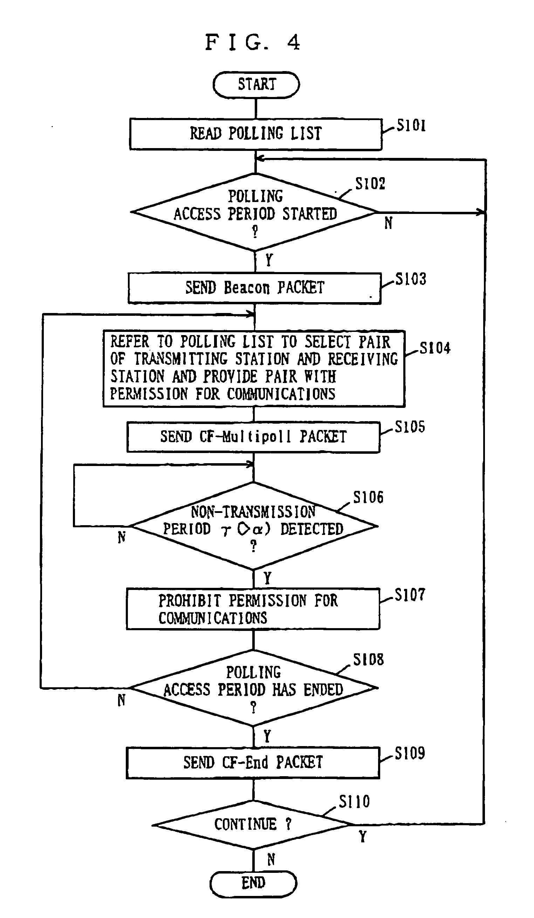

Described first is the operation of the control station 1. FIG. 4 is a flowchart showing the polling process carried out by the control station 1 (the control section 14 included therein) of FIG. 1. In FIG. 4, when the control station 1 is activated, the control section 14 reads the polling list stored in the storage section 13 into the RAM (step S101). Then, whether a polling access period has been started or not is determined (step S102). If the polling access period has not yet been started, the control station 1 does not carry out polling control, but operates in random access mode (will be described later), similarly to the other wireless stations 2 to 4.

If the polling access period has been started, the control section 14 sends a Beacon packet (step S103).

The Beacon packet is a packet for reporting to each of the wireless stations 1 to 4 that the polling access period has been started. With the Beacon packet sent by the control station 1, the polling access period, which is a predetermined time period, is set. During the polling access period, the wireless stations 1 to 4 cannot carry out packet communications unless they are provided with permission for communications.

The control section 14 then refers to the polling list for selecting any one of pairs of a transmitting station and a receiving station registered in the polling list to provide the pair with permission for communications (step S104).

Here, step S104 is described in detail below. FIG. 5 is an illustration showing an example of the polling list to be referred to by the control station 1 of FIG. 1 at the time of polling. The polling list contains all pairs of a transmitting station and a receiving station that desire to communicate with each other in the polling access period (six pairs are exemplarily shown in FIG. 5). Furthermore, each pair has a priority level (1 to 6) set therein.

The priority level is determined based on the property of data to be sent and received by the pair. For example, a higher priority level is given to a pair that transmits and receives video data for streaming playback on a real-time basis (that is, no delay is permitted). A lower priority level is given to a pair that transmits and receives control data that allows some delay.

The control station 1 refers to the polling list as illustrated in FIG. 5 for sequentially selecting the pairs in decreasing order of priority (1->2->...->6). After all pairs have been selected once, the first one is selected again (6 -> 1), and then the remaining ones are selected in decreasing order of priority (1 -> 2 → ... -> 6 -> 1 -> 2 → ...).

The control section 14 then sends a CF-Multipoll packet to the transmitting station and the receiving station selected in step 5104 (step 5105).

The CF-Multipoll packet is a packet for reporting, to the pair of wireless stations provided with permission for communications (a transmitting station and a receiving station), the contents of the permission and a specific time period P (that is, the length of a communications allowable time). An example of structure of the CF-Multipoll is illustrated in FIG. 6.

In FIG. 6, the CF-Multipoll packet contains a destination 41, permission for communications 42, and a time 43. The destination contains identifiers of the selected stations in pair (that is, the transmitting station and the receiving station). The permission for communications contains permission for Data packet transmission provided to the transmitting station and permission for DelayAck packet transmission provided to the receiving station. The.time contains a specified communications allowable time period (that is, the length of allowable time for communications between the transmitting station and the receiving station using a wireless channel), "P1", for example.

On receiving the CF-Multipoll packet, the transmitting station and the receiving station can carry out communications by using the wireless channel in a period from the reception of the packet to the end of the time period P1. During that period, the transmitting station successively sends one or more Data packets at intervals of time $\alpha$, while the receiving station receives the series of the Data packets from the transmitting station, and sends a DelayAck packet after reception has been completed. An example of structure of the DelayAck packet is illustrated in FIG. 7.

In FIG. 7, the DelayAck packet contains a destination 51 and a state of reception 52. The destination contains an identifier of the transmitting station. The state of reception contains the state of reception of a series of Data packets received from the transmitting station (that is. Data packets received when communications was permitted at the previous time).

Referring back to FIG. 4, the control station 1 then determines whether a non-transmission time $\gamma$ (> $\alpha$) has been detected (step S106). If the non-transmission time has not been detected, the control station 1 enters a wait state. If the non-transmission time has been detected in step S106, the control station 1 prohibits the pair selected in step 5104 from communicating with each other (step S107). The control station 1 then determines whether the polling access period has ended (step S108). If the polling access period has not ended, the procedure returns to step S104 for selecting the next pair. Thereafter, the same operation as mentioned above is repeated.

If it is determined in step S108 that the polling access period has ended, the control section 14 sends a CF-End packet (step S109).

Here, the CF-End packet is a packet for reporting to each of the wireless stations 1 to 4 that the polling access period has ended. For the wireless stations 1 to 4, the polling access period set in step S103 ends by the control section 1 sending the CF-End packet. During a period from the end of the polling access period to the start of the next polling access period, each of the wireless stations 1 to 4 can spontaneously carry out packet communications without being allowed to do so by the control station 1. This period is hereinafter called "random access period".

The control section 14 determines whether to continue the control operation (step S110). If the control section 14 determines to continue, the procedure returns to step S102 for repeating the same process as mentioned above. If the control section 14 determines not to continue, the control operation is ended.

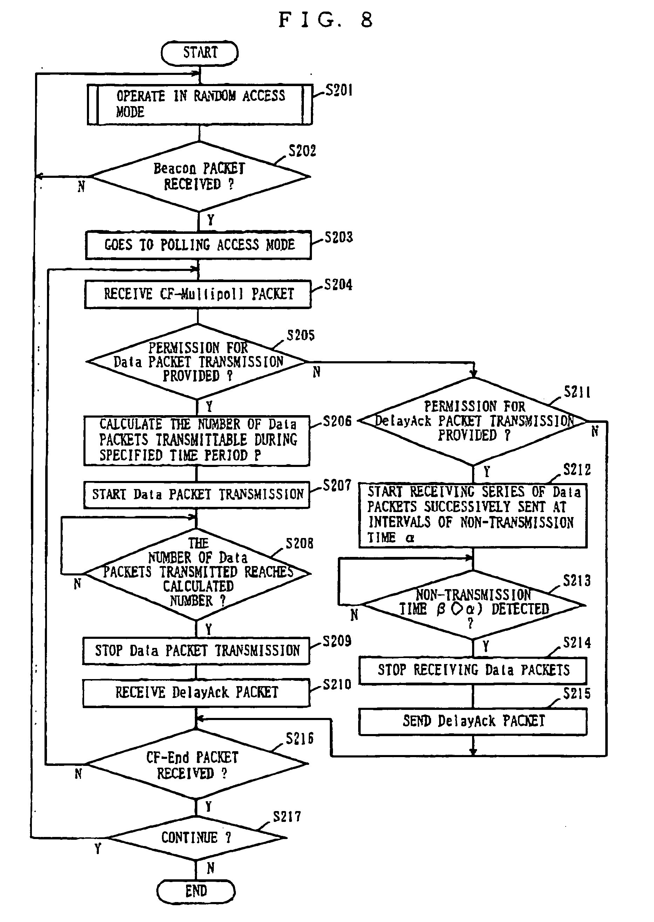

Described next is the operation of each of the wireless stations 1 to 4. FIG. 8 is a flowchart showing a communications process carried out by each of the wireless stations 1 to 4 (each control section 14) of FIG. 1. In FIG. 8, when the wireless stations 1 to 4 are activated, the control section first operates in random access mode (step S201). The operation in random access mode will be described later.

The control section 14 then determines whether the Beacon packet has been received (step S202). If the Beacon packet has not been received, the procedure returns to step S201. If it is determined in step S202 that the Beacon packet has been received, the control section 14 goes into polling access mode (step S203).

In polling access mode, the control section 14 first receives the CF-Multipoll packet (step S204), and then determines whether the packet contains permission for Data packet transmission (step S203).

If it is determined in step S205 that the packet contains such permission, the control section 14 reads the time period P1 from the CF-Multipoll packet for calculating the number of Data packets transmittable in the time period P1 (step S206).

The control section 14 then instructs the packet processing section 12 and the packet transmitting/receiving section 11 to start packeting the data stored in the storage section 13 into Data packets and sending them at time intervals $\alpha$ (step S207).

The control section 14 determines whether the number of Data packets sent based on the instruction in step 5207 has reached the number calculated in step S206 (step S208). If the number of Data packets has reached the calculated number, the control section 14 lets the packet processing section 12 and the packet transmitting/receiving section 11 continue to generate and send Data packets. If it is determined in step S208 that the number of Data packets has reached the calculated number, the control section 14 makes the packet processing section 12 and the packet transmitting/receiving section 11 stop generating and sending Data packets (step 5209). The control section 14 then receives a DelayAck packet (step S210). The procedure then goes to step S216 (will be described later).

If it is determined in step S205 that the packet does not contain the permission, the control section 14 determines whether the received CF-Multipoll packet contains the permission for DelayAck packet transmission(step S211). If the CF-Multipoll packet contains such permission, the control section 14 instructs the transmitting/receiving section 11 and the packet processing section 12 to start receiving the series of Data packets successively coming at the time intervals $\alpha$, extracting data from each packet, and storing the data in the storage section 13 (step S212).

The control section 14 then determines whether a non-transmission time $\beta$ ($> \alpha$) has been detected (step S213). If the non-transmission time $\beta$ has not been detected, the control section 14 enters the wait state. If it is determined in step S213 that the non-transmission time $\beta$ has been detected, the control section 14 instructs the transmitting/receiving section 11 and the packet processing section 12 to stop receiving and processing the Data packets (step S214). The control section 14 then causes a DelayAck packet to be sent (step S215). The procedure then goes to step S216.

If it is determined in step S211 that CF-Multipoll packet does not contain permission for DelayAck packet transmission, the control section 14 does not carry out any packet transmission. The procedure then goes to step S216.

In step S216, the control section 14 determines whether the CF-End packet has been received. If the CF-End packet has not been received, the procedure returns to step S204 for receiving the next CF-Multipoll packet. Thereafter, the same operation as mentioned above is repeated.

If it is determined in step S216 that the CF-End packet has been received, the control section 14 determines whether the operation should be continued (step S217). If it is determined that the operation should be continued, the procedure returns to step S201, and the control station 1 goes into random access mode. If it is determined in step S217 not to continue, the control station 1 stops the operation.

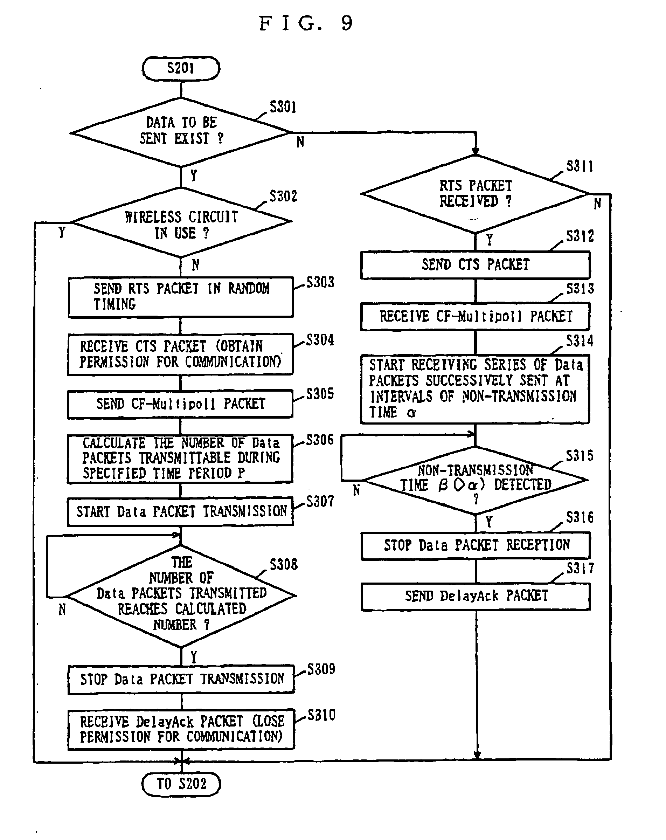

Described next is the operation of each of the wireless stations 1 to 4 (each control section 14) in random access mode. FIG. 9 is a flowchart showing the details of step S201 of FIG. 8. In FIG. 9, in random access mode, the control section 14 of each of the wireless stations 1 to 4 first determines whether any data to be sent exists (step S301). If no data exists, the procedure goes to step S311 (will be described later).

If it is determined in step S301 that any data exists, the control section 14 determines whether the wireless channel is in use (step S302). If the wireless channel is in use, the procedure goes to step S202.

If it is determined in step 5302 that the wireless channel is not in use, the control section 14 sends an RTS packet in random timing (step S303). Here, the RTS packet is a packet to be sent from the wireless station desiring to send data (the wireless station 2, for example) to the wireless station for receiving the data (the wireless station 3, for example), the packet containing a destination (identifier of the data transmitting station) and permission for communications. The RTS packet is sent in random timing in order to avoid conflicts of RTS packets simultaneously coming from plural stations.

The control section 14 then receives a CTS packet (step S304). Here, the CTS packet is a packet to be sent in response to the RTS packet, containing a destination (identifier of the data transmitting station) and permission for communications. With the RTS packet and the CTS packet thus received and sent between the pair of wireless stations (the wireless stations 2 and 3, for example), the wireless stations in pair obtain permission for communications, and become the transmitting station and the receiving station.

Thereafter, in the wireless station that has now become the transmitting station (the wireless station 2, for example), the control section 14 sends a CF-Multipoll packet (step 305). The structure of the CF-Multipoll packet is exemplarily illustrated in FIG. 6 (refer to the above description of the operation of the control station 1).

The control station 14 then calculates the number of Data packets transmittable in the time period P1 (step S306). After the time α has passed since the CF-Multipoll packet was sent, the control section 14 instructs the packet processing section 12 and the packet transmitting/receiving section 11 to packet the data stored in the storage section 13 into Data packets and send them at intervals of the time α (step S307).

The control section 14 then determines whether the number of Data packets sent in response to the instruction in step S307 has reached the number calculated in step S306 (step S308). If the number of Data packets has not yet reached the calculated number, the control section 14 lets the packet processing section 12 and the packet transmitting/receiving section 11 continue to generate and send Data packets. If it is determined in step S308 that the number of Data packets has reached the calculated number, the control section 14 makes the packet processing section 12 and the packet transmitting/receiving section 11 stop generating and sending Data packets (step S309). The control section 14 then receives a DelayAck packet (step S310). Thereafter, the procedure goes to step S202 of FIG. 8.

If it is determined in step S301 that no data to be sent exists, the control section 14 first determines whether an RTS packet has been received (step S311). If no RTS packet has been received, the procedure goes to step S202 of FIG. 8.

If it is determined in step S311 that any RTS packet has been received, the control section 14 sends a CTS packet after the time period α has passed since the RTS packet was received (step S312). With the RTS packet and the CTS packet thus received and sent between the pair of wireless stations (the wireless stations 2 and 3, for example), the wireless stations in pair obtain permission for communications, and become the transmitting station and the receiving station.

On the other hand, in the wireless station that has now become the receiving station (the wireless station 3, for example), the control section 14 receives the CF-Multipoll packet (step S313). Then, the control section 14 instructs the transmitting/receiving section 11 and the packet processing section 12 to start receiving the series of Data packets coming at the time intervals α, extracting data from each packet, and storing the data in the storage section 13 (step S314).

The control section 14 then determines whether the non-transmission time β (> α) has been detected (step S315). If the non-transmission time β has not been detected, the control section 14 enters the wait state. If it is determined in step S315 that the non-transmission time β has been detected, the control section 14 stops Data packets reception (step S316), and then sends a DelayAck packet (step S317). The procedure then goes to step S202 of FIG. 8.

Specifically described below is an example of wireless communications carried out in the system of FIG. 1. As stated above, in the system of FIG. 1, the period that permits polling access and the period that permits random access alternately appear.

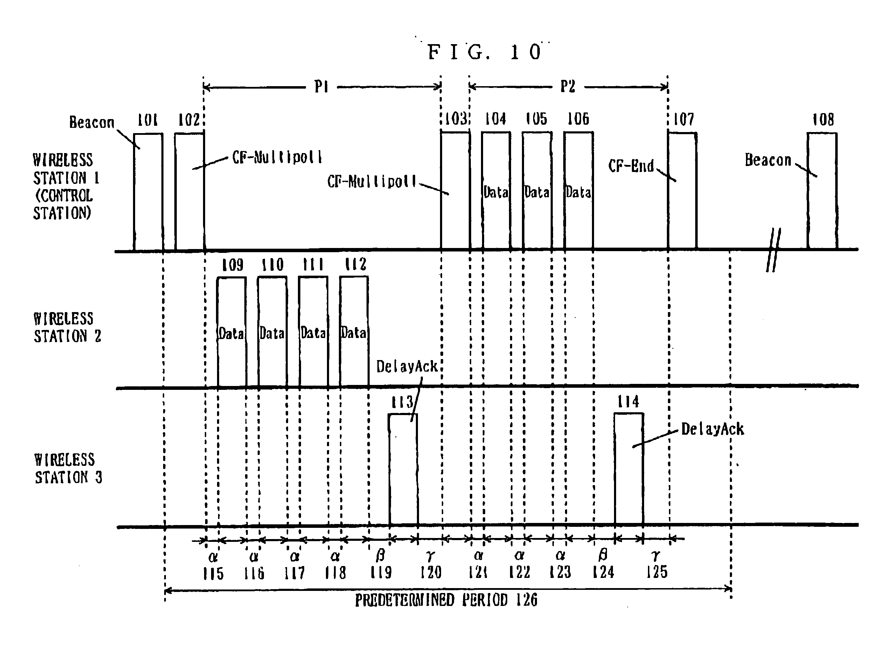

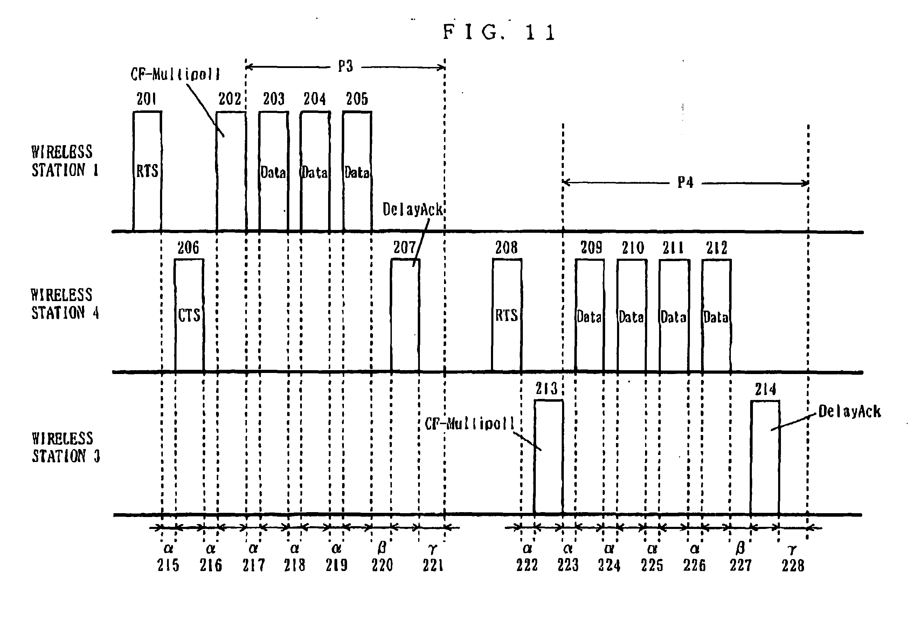

FIG. 10 is a timing chart showing an example of wireless communications carried out in the polling access period in the system of FIG. 1, FIG. 11 is a timing chart showing an example of wireless communications carried out in the random access period in the system of FIG. 1.

Described first is example wireless communications carried out in the polling access period. In FIG. 10, the control station 1 first sends Beacon101 (frame packet) for setting the polling access period. Thus, in a predetermined time period 126 starting from the time when Beacon101 was sent, only polling access is permitted. Then, from the polling list (FIG. 5), a pair with priority level 1 (the highest priority), that is, the wireless stations 2 and 3, is selected. Then, CF-Multipoll102 (report packet) indicating that the wireless station 2 is provided with permission for Data packet transmission and the wireless station 3 is provided with permission for DelayAck packet transmission.

The wireless station 2 obtains permission for Data packet transmission by receiving the CF-Multipoll102. The CF-Multipoll102 contains the communications allowable time period P1. Based on the time period P1, the length of time of each Data packet, the non-transmission time periods α, β, and γ, and the length of time of the DelayAck packet, the wireless station 2 calculates the number of Data packets to be sent in the time period P1.

For example, assume that P1 = 1800μsec, the length of the Data packet = 340μsec, α = 15μsec, β= 25 μsec, γ = 35 μsec, and the length of the DelayAck packet = 150 μsec. Under these assumptions, the number of Data packets M has to satisfy the following equation:

$$M*(15 + 340) + 25 + 150 + 35 < 1500.$$

The above equation is solved as M < 1590/355 (= 4.4 ...). Therefore, the number of Data packets transmittable in the specified time period P1 is four at maximum.

After a non-transmission period $\alpha115$, the wireless station 2 sends Data109 (data packet). Then, after a non-transmission period $\alpha116$, the wireless station 2 sends Data110. Similarly, the wireless station 2 sends Data111 and Data112 after non-transmission periods $\alpha117$ and $\alpha118$, respectively.

After having sent the calculated number (here, four) of Data packets 109 to 112, the wireless station 2 stops transmission, resultantly causing a non-transmission period $\beta119$ longer than the non-transmission period $\alpha$. At this moment, the wireless station 2 enters a state of waiting for a response packet from the receiving station (wireless station 3).

By detecting the non-transmission period $\beta119$, the wireless station 3 can know that the wireless station 2 has once completed Data packet transmission and then entered the wait state (that is, can detect the end of the series of the Data packets 109 to 112 sent after the CF-Multipoll102), and sends DelayAck113 (response packet). DelayAck 113 contains the reception results of the Data packets received before CF-Multipoll102 comes (not shown).

Based on the reception results contained in the received DelayAck113, the wireless station 2 can know whether any Data packet previously sent with permission should be re-sent due to error. Even if DelayAck113 is not successfully received, a DelayAck packet coming next also contains the reception results of the Data packets 109 to 112. Therefore, any Data packet that has failed to be received can be re-sent.

Then, when transmission of DelayAck113 causes no Data packet for transmission to be left in the wireless station 2, a non-transmission period $\gamma120$ longer than the non-transmission period $\beta119$ occurs . At this moment, the wireless station 3 loses the permission for DelayAck packet transmission, the wireless station 2 loses the permission for Data packet transmission, and therefore the data transmission from the wireless station 2 to the wireless station 3 has been completed. If any Data packet to be transmitted is still left in the wireless station 2, it is possible to send the Data Packet after the non-transmission period $\beta119$ (or $\alpha118$) shorter than the non-transmission period $\gamma120$.

By detecting the non-transmission period $\gamma120$, the control station 1 can know that the wireless station 2 has lost the permission for Deta packet transmission, and that the wireless station 3 has lost the permission for DelayAck packet transmission.

The control station 1 then checks to see whether the predetermined time period 126 still remains. If the period 126 remains, the control station 1 selects a pair having the next priority level 2 (the wireless stations 1 and 3) from the polling list (FIG. 5), and sends CF-Multipoll103 (report packet) indicating that the wireless station 1 (the control station itself) is provided with permission for Data packet transmission and the wireless station 3 is provided with DelayAck packet transmission. The CF-Multipoll103 contains a communications allowable time period P2.

Provided with the permission for Data packet transmission, the control station 1 calculates the number of Data packets transmittable in the specified time period P2 (assume herein that the number is three). After a non-transmission period $\alpha121$, the control station 1 sends a data packet (Data104), and after a non-transmission period $\alpha122$, the control station 1 sends Data105. Similarly, the control station 1 sends Data106 after a non-transmission period $\alpha123$.

After having sent the calculated number (here, three) of Data packets 104 to 106, the control station 1 stops transmission, causing a non-transmission period $\beta124$ longer than the non-transmission period $\alpha$. At this moment, the control station 1 enters a state for waiting for a response packet from the receiving station (wireless station 3).

By detecting the non-transmission period $\beta124$, the wireless station 3 can know that the control station 1 has once completed Data packet transmission and then entered the wait state (that is, can detect the end of the series of Data packets 104 to 106 sent after CF-Multipoll103), and then sends a response packet (DelayAck114). DelayAck114 contains the reception results of Data packets received before CF-Multipoll103 comes.

Based on the reception results contained in the received DelayAck114, the control station 1 can know whether any Data packet previously sent to the wireless station 3 with permission should be re-sent due to error. Even if DelayAck114 is not successfully received, a DelayAck packet coming next also contains the reception results of the Data packets 104 to 106. Therefore, any Data packet that has failed to be received can be re-sent.

Then, when transmission of DelayAck114 causes no Data packet for transmission to be left in the control station 1, a non-transmission period $\gamma125$ longer than the non-transmission period $\beta124$ occurs. At this moment, the wireless station 3 loses the permission for DelayAck packet transmission, the control station 1 loses the permission for Data packet transmission, and therefore the data transmission from the control station 1 to the wireless station 3 has been completed. If any Data packet to be transmitted is still left in the control station 1, it is possible to send the Data Packet after the non-transmission period $\beta124$ (or $\alpha123$) shorter than the non-transmission period $\gamma125$.

Then, transmission of DelayAck114 causes a non-transmission period $\gamma125$ longer than the non-transmission period $\beta124$. At this moment, the wireless station 3 loses the permission for DalayAck packet transmission.

By detecting the non-transmission period $\gamma125$, the control station 1 can know that the wireless station 3 has lost the permission for DelayAck packet transmission.

The control station 1 then checks to see whether the predetermined time period 126 still remains. If the period 126 remains, the control station 1 selects a pair having the next priority level 3 from the polling list (FIG. 5), and sends a new report packet. In the present example, however, the period 126 is running short, and therefore the control station 1 sends CF-End107, which is a polling-access end packet for forcefully terminating polling access, thereby reporting to each of the wireless stations 2 to 4 that polling access is suspended.

Thereafter, a random access period is set until Beacon 108 comes next. After Beacon 108, the same process as described above is carried out. When Beacon 108 sets a new polling access period, however, the pair having priority level 1 is first selected again for permission, irrespectively of which is the last pair permitted in the previous polling access period. Alternatively, if the pair having priority level 3 has been provided with permission for communications in the previous polling access period, for example, the pair having priority level 4 may be provided with permission for communications in the next polling access period.

With reference to FIG. 11, described next is wireless communications carried out in the random access period. FIG. 11 illustrates a case where data transmission is made from the wireless station 1 to the wireless station 4, and then from the wireless station 4 to the wireless station 3. In FIG. 11, the wireless station 1 checks to see whether the wireless channel is in use. If not in use, the wireless station 1 sends RTS (request to send) 201, which is a packet for requesting transmission at a random time interval, to the wireless station 4.

On receiving RTS201, the wireless station 4 sends CTS (clear to send) 206, which is a packet for permitting transmission, at an interval of a non-transmission period $\alpha$215, thereby reporting to the wireless station 1 that data transmission is permitted.

On receiving CTS206 and before starting data transmission, the wireless station 1 calculates the number of Data packets transmittable in a time period P3. This calculation is made based on the communications allowable time period P3, the length of time of each Data packet, the non-transmission times $\alpha$, $\beta$, and $\gamma$, and the length of time of the DelayAck packet. Furthermore, this calculation is similar to that made in the polling access period. Assume herein that the calculated number of Data packets is three.

The wireless station 1 then sends CF-Multipo11202, which is a packet for reporting that the wireless station 1 is provided with permission for Data packet transmission and the wireless station 4 is provided with permission for DelayAck packet transmission, at an interval of a non-transmission period $\alpha$216. If CTS602 cannot be received, the wireless station 1 re-sends the RTS 201 to the wireless station 4.

On sending CF-Multipoll202, the wireless station 1 obtains permission for Data packet transmission. On receiving CF-Multipoll202, the wireless station 4 obtains permission for DelayAck packet transmission.

The wireless station 1 then successively sends the calculated number (here, three) of the Data packets 203 to 205 at intervals of non-transmission periods $\alpha$217 to $\alpha$219, respectively. After these three Data packets 203 to 205 have thus been sent, the wireless station 1 stops transmission, thereby causing a non-transmission period $\beta$220 longer than the non-transmission period $\alpha$219. At this moment, the wireless station 1 enters a state of waiting a response packet from the receiving station (wireless station 4).

By detecting the non-transmission period $\beta$220, the wireless station 4 can know that the wireless station 1 has once completed Data packet transmission and then entered the wait state, and then sends a response packet (DelayAck207). DelayAck207 contains the reception results of Data packets received before CF-Multipoll 202 comes (not shown).

Based on the reception results contained in the received DelayAck207, the wireless station 1 can know whether any Data packet previously sent with permission should be re-sent due to error. Even if DelayAck207 is not been successfully received, a DelayAck packet coming next also contains the reception results of the Data packets 203 to 205. Therefore, any Data packet that has failed to be received can be re-sent.

Then, when transmission of DelayAck207 causes no Data packet for transmission to be left in the wireless station 1, a non-transmission period $\gamma$221 longer than the non-transmission period $\beta$220 occurs. At this moment, the wireless station 4 loses the permission for DelayAck packet transmission, the wireless station 1 loses the permission for Data packet transmission, and therefore the data transmission from the wireless station 1 to the wireless station 4 has been completed. If any Data packet to be transmitted is still left in the wireless station 1, it is possible to send the Data Packet after the non-transmission period $\beta$220 (or $\alpha$219) shorter than the non-transmission period $\gamma$221.

Then, transmission of DelayAck207 causes a non-transmission period $\gamma$221 longer than the non-transmission period $\beta$124. At this moment, the wireless station 4 loses the permission for DelayAck packet transmission, and therefore data transmission from the wireless station 1 to the wireless station 4 has been completed.

When no hidden terminals (terminals that are within the network system but cannot be located by one wireless station because they are out of the reach of radio waves) exist, exchanges of RTS and CTS can be omitted.

Even if any hidden terminal exists, CTS can be omitted by commonly using CTS and CF-Multipoll. Here, in data transmission from the wireless station 4 to the wireless station 3 carried out after data transmission has been completed from the wireless station 1 to the wireless station 4, CTS is omitted.

The wireless station 4 desiring to send data to the wireless station 3 first checks to see whether the wireless channel is in use. If not in use, the wireless station 4 sends RTS (request to send) 208, which is a packet for requesting transmission at a random interval, to the wireless station 3.

On receiving RTS208, the wireless station 3 sends CF-MUltipoll213, which is a packet for reporting that the wireless station 4 is permitted to send Data packets and the wireless station 3 itself is permitted to send a DelayAck packet in a non-transmission period $\alpha$222. CF-Multipoll213 contains a communications allowable time period P4.

On receiving CF-MUltipoll213 and before starting data transmission, the wireless station 4 calculates the number of Data packets to be sent in the time period P4. This calculation is made based on the communications allowable time period P4, the length of time of each Data packet, non-transmission times $\alpha$, $\beta$, and $\gamma$, and the length of time of the DelayAck packet. Furthermore, this calculation is similar to that carried out in the polling access period. Assume herein that the calculated number of Data packet is four.

Note that, if the wireless station 4 has failed to receive CF-Multipol1213, transmission request is made again.

The wireless station 4 then successively sends the calculated number (here, four) of Data packets 209 to 212 at intervals $\alpha$223 to $\alpha$226, respectively. After having sent these four Data packets 209 to 212, the wireless station 4 stops transmission, thereby causing a non-transmission period $\beta$227 longer than the non-transmission period $\alpha$226. At this moment, the wireless station 4 enters a state of waiting a response packet from the receiving station (wireless station 3).

By detecting the non-transmission period $\beta$227, the wireless station 3 can know that the wireless station 4 has once completed Data packet transmission and entered the wait state, and sends a response packet (DelayAck214). DelayAck214 contains the reception results of Data packets previously received before the time when CF-multipol1213 was received.

Based on the reception results contained in the received DelayAck214, the wireless station 4 can know any Data packet that should be re-sent due to error at the previous transmission with permission. Even if DelayAck214 has not been successfully received, a DelayAck packet coming next also contains the reception results of the Data packets 209 to 212. Therefore, any Data packet that has failed to be received can be re-sent.

Then, transmission of DelayAck214 causes a non-transmission period $\gamma$228 longer than the non-transmission period $\beta$227. At this moment, the wireless station 3 loses permission for DelayAck packet transmission, and data transmission from the wireless station 4 to the wireless station 3 has been completed.

Then, when transmission of DelayAck214 causes no Data packet for transmission to be left in the wireless station 4, a non-transmission period $\gamma$228 longer than the non-transmission period $\beta$227 occurs. At this moment, the wireless station 3 loses the permission for DelayAck packet transmission, the wireless station 4 loses the permission for Data packet transmission, and therefore the data transmission from the wireless station 4 to the wireless station 3 has been completed. If any Data packet to be transmitted is still left in the wireless station 3, it is possible to send the Data Packet after the non-transmission period $\beta$227 (or $\alpha$226) shorter than the non-transmission period $\gamma$228.

As such, in the present embodiment, the polling access period and the random access period alternately appear during communications. During the polling access period, any one of the wireless stations (here, the wireless station 1) serves as the control station, selecting a pair of stations (the wireless stations 2 and 3, for example) as the transmitting station and the receiving station, and permitting them to communicate with each other within the specified time period P. During the random access period, on the other hand, any station to send or receive data (the wireless stations 1 and 4, for example) determines whether the wireless channel is in use. If not in use, these stations are provided with permission to communicate with each other in the specified time period P, thereby serving as the transmitting station and the receiving station.

In either access period, the transmitting station successively sends a series of data packets in the specified time period P. On receiving the series of data packets, the receiving station sends a response packet. Thus, compared with a case where a response packet is sent for every data packet received, the number of response packets sent per unit time can be reduced. This reduction can increase the number of data packets to be sent, and therefore can achieve higher transmission efficiency.

Also, in the present embodiment, in the polling access period, if the pair of stations provided with permission for communications with each other has completed communications before the specified time period P passes, the control station 1 forcefully terminates the permission for communications, Therefore, the next pair of stations can be moved up for permission for starting communications. This makes data transfer more efficient. During the random access period, on the other hand, if the transmitting station and the receiving station have completed communications before the specified time period P passes, the permission provided to these stations for communications is forcefully terminated. Thus, other transmitting station and receiving station can be moved up for permission for starting communications. This makes data transfer more efficient.

(Second embodiment)

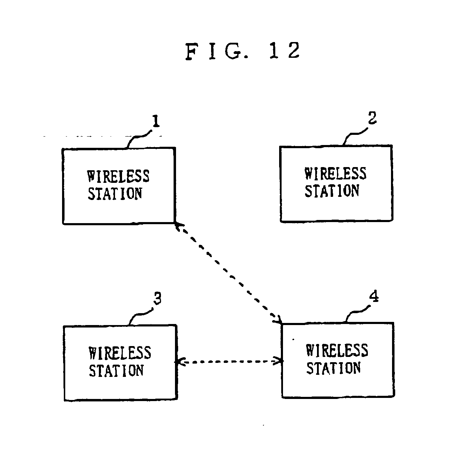

FIG. 12 is a block diagram illustrating the configuration of a wireless communications system according to a second embodiment of the present invention. In FIG. 12, the wireless communications system is configured by four wireless stations 1 to 4 that wirelessly communicate with one another.

In the first embodiment, the polling access period and the random access period alternately appear. During the polling access period, the wireless station 1 exemplarily serves as the control station, controlling communications among the wireless stations. During the random access period, each wireless station obtains permission for communications. In the second embodiment, on the other hand, no polling access period is set, and therefore random access is always possible. Random access carried out in the second embodiment is similar to that in the first embodiment.

Each of the wireless stations 1 to 4 in FIG. 12 is similar in construction and operation to each of the wireless station 1 to 4 in FIG. 1 (refer to FIG. 2 and (b) of FIG. 3, and the description in the first embodiment).

The operation of each of the wireless stations 1 to 4 in FIG. 12 is similar to the operation carried out by each of the wireless stations 1 to 4 of FIG. 1 in random access mode (refer to the flowchart of FIG. 9). A specific example of wireless communications carried out in the system of FIG. 12 is similar to that carried out in the random access period in the first embodiment (refer to the timing chart of FIG. 11).

As stated above, in the present embodiment, random access is always possible. In such a case, high transmission efficiency can be achieved.

In the first and second embodiments, the transmitting station successively sends Data packets at intervals of the time period $\alpha$. Having sent the calculated number of Data packets, the transmitting station temporarily stops sending packet transmission. When the next Data packet does not come after the time $\beta$ ($> \alpha$) has passed since the last Data Packet was received, the receiving station determines that Data transmission has been once completed, and then sends a DelayAck packet.

In third and fourth embodiments described below, the transmitting station also successively sends Data packets at intervals of the time period $\alpha$. Having sent the calculated number of Data packets, the transmitting station sends AckReq after the time period $\alpha$ for temporarily stopping packet transmission. On receiving the AckReq packet, the receiving station determines that Data transmission has been once completed, and then sends a DelayAck packet.

In other words, the third and fourth embodiments are similar to the first and second ones except for the process for detecting the end of the series of Data packets coming from one wireless station.

(Third embodiment)

The configuration of a wireless communications system according to the third embodiment of the present invention is similar to that according to the first embodiment, and therefore FIG. 1 is also referred to for description below. In FIG. 1, the wireless communications system is configured by four wireless stations 1 to 4 that communicate with each other. The wireless station 1 serves as the control station for controlling communications among the wireless stations 1 to 4.

The construction of each of the wireless stations 1 to 4 is similar to that in the first embodiment, and therefore FIGS. 2 and 3 are referred to for description. Each component illustrated in FIGS. 2 and 3 operates similarly to the first embodiment. However, the control program for the wireless station (refer to FIG. 3(b)) is partly different from that in the first embodiment. As a result , how to detect the end of the series of Data packets is different from that in the first embodiment (other operations are the same as those in the first embodiment).

The process carried out by the control station 1 (the control section 14) is similar to that in the first embodiment (refer to the flowchart of FIG. 4), and therefore is not described herein.

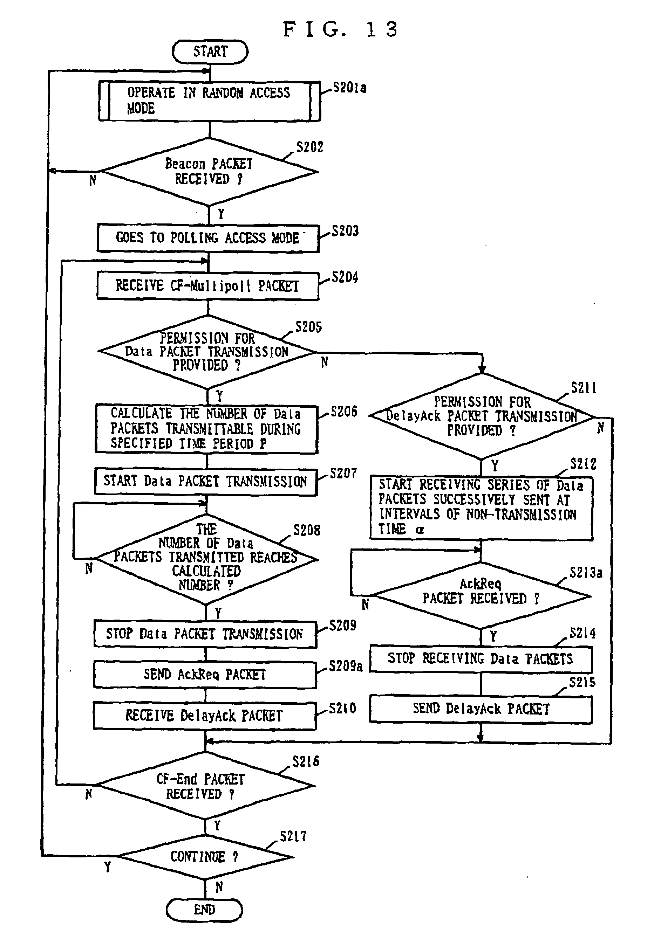

Described is the operation of each of the wireless stations 1 to 4. FIG. 13 is a flowchart showing the communications process carried out by each of the wireless stations 1 to 4 (the control section 14) of FIG. 1. In FIG. 13, when each of the wireless stations 1 to 4 is activated, the control section 14 first operates in random access mode (step S201a). The operation in random access mode will be described later.

The following processes in steps S202 through S209 are the same as those in the first embodiment (refer to FIG. 8), and therefore are not described herein. In step S209, after stopping generation and transmission of Data packets, the control section 14 sends an AckReq packet after the non-transmission period $\alpha$ (step S209a). The control section 14 then receives a DelayAck packet (step S210). Thereafter, the procedure goes to step S216.

Here, the AckReq packet is a packet sent to the receiving station from the transmitting station that has once completed transmission of the series of Data packets and entered the wait state for requesting a response. The AckReq packet has an identifier of the receiving station and a response request.

The following processes in step S211 and S212 are similar to those in the first embodiment, and therefore are not described herein. After the series of Data packets are started to be received in step S212, the control section 14 determines whether an AckReq packet has been received (step S213a). If not received, the control section 14 enters the wait state. If received, the control section 14 instructs the transmitting/receiving section 11 and the packet processing section 12 to stop receiving and processing Data packets (step S214), and then causes a DelayAck packet to be sent (step S215). The procedure then goes to step S216.

The following processes in steps S216 and S217 are similar to those in the first embodiment, and therefore are not described herein.

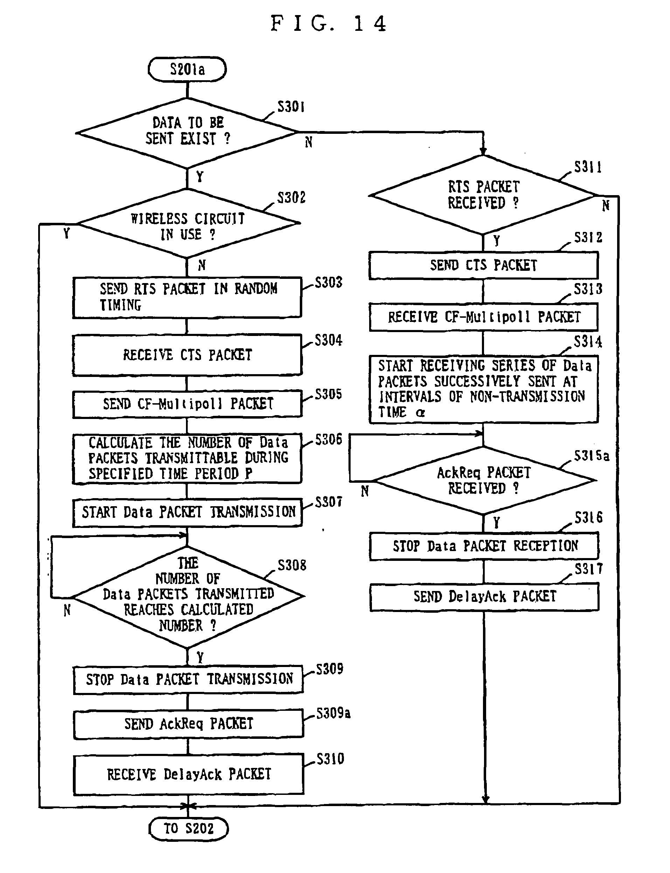

Described next is the above step S201a, that is, the operation carried out by each of the wireless stations 1 to 4 in random access mode. FIG. 14 is a flowchart showing the details of step S201a of FIG. 13. In FIG. 14, the processes in steps S301 to S309 are similar in those in the first embodiment (refer to the flowchart of FIG. 9), and therefore are not described herein.

After stopping transmission and generation of Data packets in step S309, the control section 14 sends an AckReq packet (step S309a). The following process in steps S310 through S314 are similar to those in the first embodiment, and therefore are not described herein. After the series of Data packets are started to be received in step S314, the control section 14 determines whether an AckReq packet has been received (step S315a). If not received, the control section 14 enters the wait state.

If it is determined in step S315a that an AckReq packet has been received, the control section 14 stops receiving Data packets (step S316), and then sends a DelayAck packet (step S317). The procedure goes to step S202 of FIG. 13.

Described specifically below is an example of wireless communications carried out in the system of FIG. 1. As stated above, in the system of FIG. 1, the period in which polling access is permitted and the period in which random access is permitted alternately appear.

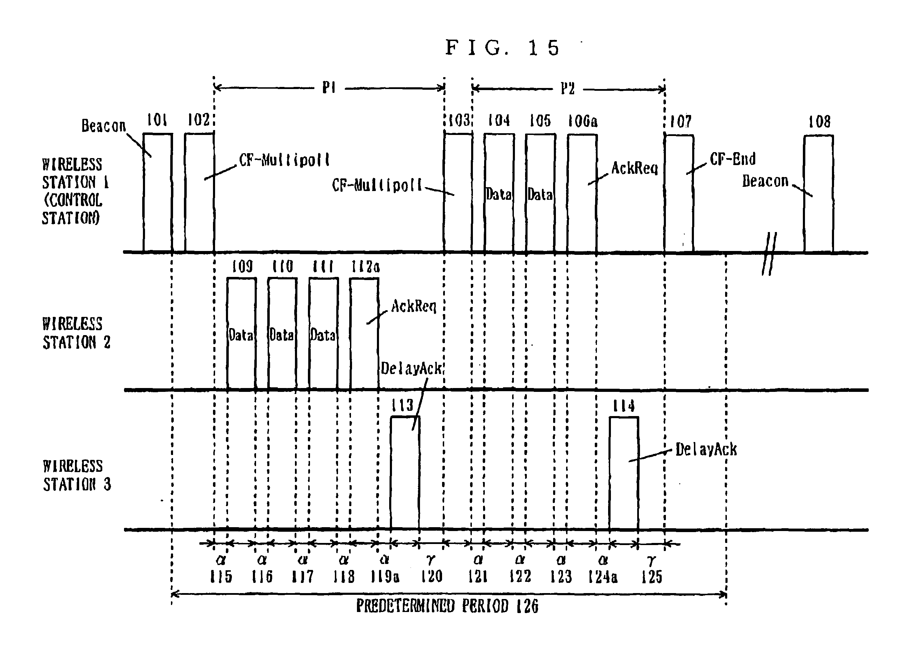

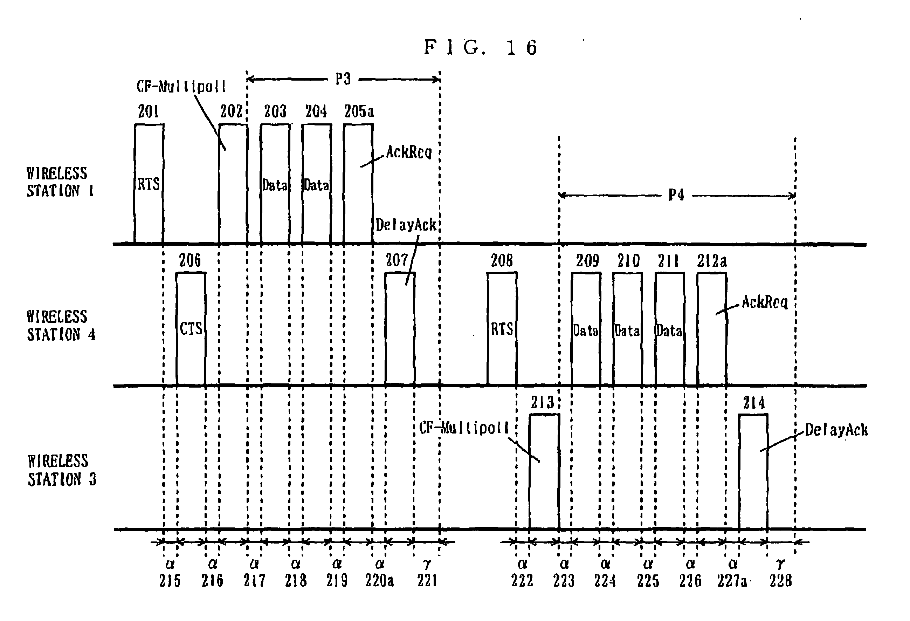

FIG. 15 is a timing chart showing an example of wireless communications carried out in the system of FIG. 1 in the polling access period. FIG. 16 is a timing chart showing an example of wireless communications carried out in the system of FIG. 1 in the random access period.

With reference to FIG. 15, described first is the example of wireless communications carried out in the polling access period. In FIG. 15, the control station 1 sends Beacon101 (frame packet) for setting the polling access period. Thus, only polling access is permitted for a predetermined period 126 since the time when Beacon 101 is sent. The control station 1 then selects, from the polling list (FIG. 5), a pair having priority 1 (highest priority), the wireless stations 2 and 3, for example. The control station 1 then sends a CF-MultIpoll102 (report packet) indicating that the wireless station 2 is permitted to send Data packets and the wireless station 3 is permitted to send a DelayAck packet.

By receiving the CF-Multipoll102, the wireless station 2 obtains permission to send Data packets. The CF-Multipoll102 contains a communication allowable time period P1. Based on the time period P1, the length of time of each Data packet, non-transmission times $\alpha$ and $\gamma$, the length of time of the AckReq packet, and the length of time of the DelayAck packet, the wireless station 2 calculates the number of Data packets transmittable in the time period P1.

For example, assume that P1 = 1800$\mu$sec, the length of the Data packet = 340$\mu$sec, $\alpha$ = 15$\mu$sec, $\gamma$ = 35 $\mu$sec, the length of AckReq packet = 150$\mu$sec, and the length of the DelayAck packet = 200 $\mu$sec. Under these assumptions, the number of Data packets M has to satisfy the following equation:

$$\text{M*(15 + 340) + (15 + 200) + (15 + 150) + 35 < 1800.}$$

The above equation is solved as M < 1385/355 (= 3.9 ...). Therefore, the number of Data packets transmittable in the specified time period P1 is three at maximum.

The wireless station 2 sends Data109 (data packet) after a non-transmission period $\alpha$115, and then sends Data110 after a non-transmission period $\alpha$116. Similarly, the wireless station 2 sends Data111 after the non-transmission period $\alpha$117

After having sent the calculated number (here, three) of Data packets 109 to 111, the wireless station 2 sends an AckReq112a (response request packet) after the non-transmission time $\alpha$. At this moment, the wireless station 2 enters a state of waiting for a response packet from the receiving station (wireless station 3).

By receiving AckReq112a, the wireless station 3 can know that the wireless station 2 has once completed Data packet transmission and entered the wait state (that is, can detect the end of the series of Data packets 109 to 111 sent after CF-Multipol1102). The wireless station 3 then sends DelayAck113 (response packet). DelayAck113 contains the reception results of Data packets (not shown) received before CF-Multipol1112 was received.

Based on the reception results contained in DelayAck113, the wireless station 2 can know any Data packet that should be re-sent due to error at the previous transmission with permission. Even if DelayAck113 has not been successfully received, a DelayAck packet coming next also contains the reception results of the Data packets 109 to 111. Therefore, the wireless station 2 can re-send any Data packet that has failed to be received.

Then, when transmission of DelayAck113 causes no Data packet for transmission to be left in the wireless station 2, a non-transmission period $\gamma$120 longer than the non-transmission period $\alpha$119a occurs. At this moment, the wireless station 3 loses the permission for DelayAck packet transmission, the wireless station 2 loses the permission for Data packet transmission, and therefore the data transmission from the wireless station 2 to the wireless station 3 has been completed. If any Data packet to be transmitted is still left in the wireless station 2, it is possible to send the Data Packet after the non-transmission period $\alpha$119a shorter than the non-transmission period $\gamma$120.

The control station 1 detects the non-transmission period $\gamma$120 to know that the wireless station 2 has lost the permission for Data packet transmission and that the wireless station 3 has lost the permission for DelayAck packet transmission.

The control station 1 then checks to see whether the predetermined time period 126 still remains. If the period 126 remains, the control station 1 selects a pair having the next priority 2 (the wireless stations 1 and 3) from the polling list (FIG. 5), and sends CF-Multlpoll103 (report packet) indicating that the wireless station 1 (the control station itself) is permitted to transmit Data packets and the wireless station 3 is permitted to transmit a DelayAck packet. The CF-Multipoll103 has a communications allowable time period P2 described therein.

When obtaining permission to send Data packets, the control station 1 calculates the number of Data packets to be transmitted in the specified time period P2 (assume herein that the calculated number is two). Then, after the non-transmission period $\alpha$121, the control station 1 sends a data packet (Data104) after the non-transmission period $\alpha$121, and after the non-transmission period $\alpha$122, sends Data105.

After having sent the calculated number (here, two) of Data packets 104 and 105, the control station 1 sends an AckReq packet 106a after the time $\alpha$123. At this moment, the wireless station 1 enters a state of waiting for a response packet from the receiving station (wireless station 3).

By detecting AckReq packet 106a, the wireless station 3 can know that the control station 1 has once completed Data packet transmission and entered the wait state (that is, can detect the end of the series of Data packets 104 and 105 after CF-Multipoll103), and sends DelayAck114 (response packet) after the non-transmission period $\alpha$124a. DelayAck114 contains the reception results of the series of Data packets received before CF-Multipoll103.

Based on the reception results contained in DelayAck114, the control station 1 can know any Data packet that should be re-sent to the wireless station 3 due to error at the previous transmission with permission. Even if DelayAck114 has not been successfully received, a DelayAck packet coming next also contains the reception results of the Data packets 104 and 105. Therefore, the control station 1 can re-send any Data packet that has failed to be received.

Then, when transmission of DelayAck114 causes no Data packet for transmission to be left in the control station 1, a non-transmission period $\gamma$125 longer than the non-transmission period $\alpha$124a occurs. At this moment, the wireless station 3 loses the permission for DelayAck packet transmission, the control station 1 loses the permission for Data packet transmission, and therefore the data transmission from the control station 1 to the wireless station 3 has been completed. If any Data packet to be transmitted is still left in the control station 1, it is possible to send the Data Packet after the non-transmission period $\alpha$124a shorter than the non-transmission period $\gamma$125.

The control station 1 detects the non-transmission period $\gamma$125 to know that the wireless station 3 has lost the permission for DelayAck packet transmission.

The control station 1 then checks to see whether the predetermined time period 126 still remains. If the period 126 remains, the control station 1 selects a pair having the next priority 3 from the polling list (FIG. 5), and sends a new report packet (CF-Multipoll). In the present example, however, the period 126 is running short, and therefore the control station 1 sends CF-End107, which is a polling-access end packet for forcefully terminating polling access, thereby reporting to each of the wireless stations 2 to 4 that polling access is suspended.

Thereafter, a random access period is set until Beacon 108 comes next. After Beacon 108, the same process as described above is carried out. When Beacon 108 sets a new polling access period, however, the pair having priority 1 is selected again first for permission irrespectively of which is the last pair permitted in the previous polling access period. Alternatively, if the pair having priority 3 has been provided with permission for communications in the previous polling access period, for example, the pair having priority 4 may be provided with permission for communications in the next polling access period.

With reference to FIG. 16, described next is wireless communications carried out in the random access period. FIG. 16 illustrates a case where data transmission is made from the wireless station 1 to the wireless station 4, and the from the wireless station 4 to the wireless station 3. In FIG. 16, the wireless station 1 checks to see whether the wireless channel is in use. If not in use, the wireless station 1 sends RTS (request to send) 201, which is a packet for requesting transmission at random time intervals, to the wireless station 4.

On receiving RTS201, the wireless station 4 sends CTS (clear to send) 206, which is a packet for permitting transmission at an interval of a non-transmission period $\alpha$215, thereby reporting to the wireless station 1 that data transmission is permitted.

On receiving CTS206 and before starting data transmission, the wireless station 1 calculates the number of Data packets transmittable in the time period P3. This calculation is made based on the communications allowable time period P3, the length of time of each Data packet, the non-transmission time $\alpha$, $\beta$, and $\gamma$, and the length of time of the DelayAck packet. Furthermore, this calculation is similar to that made in the polling access period. Assume herein that the calculated number of Data packets is two.

The wireless station 1 then sends CF-Multipoll202, which is a packet for reporting that the wireless station 1 itself is permitted to send Data packets and the wireless station 4 is permitted to send a DelayAck packet, at an interval of a non-transmission period $\alpha$216. If CTS602 cannot be received, the wireless station 1 re-sends the RTS 201.

On sending CF-Multipo11202, the wireless station 1 obtains permission for Data packet transmission. On receiving CF-Multipoll202, the wireless station 4 obtains permission for DelayAck packet transmission.

The wireless station 1 then successively sends the calculated number (here, two) of the Data packets 203 and 204 at intervals of non-transmission periods $\alpha$217 and $\alpha$219, respectively. After these two Data packets 203 and 204 have thus been sent, the wireless station 1 sends an AckReq packet 205a at an interval of the time $\alpha$, thereby stopping transmission. At this moment, the wireless station 1 enters a state of waiting for a response packet from the receiving station (wireless station 4).

By detecting the AckReq packet 205a, the wireless station 4 can know that the wireless station 1 has once completed Data packet transmission and entered the wait state, and then sends DelayAck207 (a response packet). DelayAck207 contains the reception results of Data packets (not shown) received before the time when CF-Multipoll 202 is received.

Based on the reception results contained in the received DelayAck207, the wireless station 1 can know any Data packet that should be re-sent due to error at the previous transmission with permission. Even if DelayAck207 has not been successfully received, a DelayAck packet coming next also contains the reception results of the Data packets 203 and 204. Therefore, the wireless station 2 can re-send any Data packet that has failed to be received.

Then, when transmission of DelayAck207 causes no Data packet for transmission to be left in the wireless station 1, a non-transmission period $\gamma$221 longer than the non-transmission period $\alpha$220a occurs. At this moment, the wireless station 4 loses the permission for DelayAck packet transmission, the wireless station 1 loses the permission for Data packet transmission, and therefore the data transmission from the control station 1 to the wireless station 4 has been completed. If any Data packet to be transmitted is still left in the control station 1, it is possible to send the Data Packet during the non-transmission period $\alpha$220a shorter than the non-transmission period $\gamma$221.

When no hidden terminals (terminals that are within the network system but cannot be located by one wireless station because they are out of the reach of radio waves) exist, exchanges of RTS and CTS can be omitted.

Even if any hidden terminal exists, CTS can be omitted by commonly using CTS and CF-Multipoll. Here, in data transmission from the wireless station 4 to the wireless station 3 carried out after data transmission has been completed from the wireless station 1 to the wireless station 4, CTS is omitted.

The wireless station 4 desiring to send data to the wireless station 3 first checks to see whether the wireless channel is in use. If not in use, the wireless station 4 sends RTS (request to send) 208, which is a packet for requesting transmission at a random interval, to the wireless station 3.

On receiving RTS208, the wireless station 3 sends CF-MUltipoll213, which is a packet for reporting that the wireless station 4 is permitted to send Data packets and the wireless station 3 itself is permitted to send a DelayAck packet within a non-transmission period $\alpha$222, CF-Multipoll213 contains a communications allowable time period P4.

On receiving CF-MUltipoll213 and before starting data transmission, the wireless station 4 calculates the number of Data packets transmittable in the time period P4. This calculation is made based on the communications allowable time period P4, the length of time of each Data packet, non-transmission times $\alpha$, $\beta$, and $\gamma$, and the length of time of the DelayAck packet. Furthermore, this calculation is similar to that carried out in the polling access period. Assume herein that the calculated number of Data packet is three.

Note that, if the wireless station 4 has failed to receive CF-Multipoll213, transmission request is made again.

The wireless station 4 then successively sends the calculated number (here, three) of Data packets 209 to 211 at intervals $\alpha$223 to $\alpha$225, respectively. After having sent these three Data packets 209 to 211, the wireless station 4 sends an AckReq packet 212a at the interval of the time $\alpha$, thereby stopping transmission. At this moment, the wireless station 4 enters a state of waiting for a response packet from the receiving station (wireless station 3).

By detecting the AckReq packet 212a, the wireless station 3 can know that the wireless station 4 has once completed Data packet transmission and entered the wait state, and sends DelayAck214 (a response packet). DelayAck214 contains the reception results of Data packets previously received before the time when CF-Multipol1213 was received (not shown).

Based on the reception results contained in the received DelayAck214, the wireless station 4 can know any Data packet that should be re-sent due to error at the previous transmission with permission. Even if DelayAck214 has not been successfully received, a DelayAck packet coming next also contains the reception results of the Data packets 209 to 211. Therefore, the wireless station 4 can re-send any Data packet that has failed to be received.

Then, when transmission of DelayAck214 causes no Data packet for transmission to be left in the wireless station 4, a non-transmission period $\gamma$228 longer than the non-transmission period $\alpha$227a occurs . At this moment, the wireless station 4 loses the permission for DelayAck packet transmission, the wireless station 4 loses the permission for Data packet transmission, and therefore the data transmission from the control station 1 to the wireless station 4 has been completed. If any Data packet to be transmitted is still left in the wireless station 4, it is possible to send the Data Packet during the non-transmission period α227a shorter than the non-transmission period γ228.

Note that, in the present embodiment, the transmitting station sends an AckReq packet after completing transmission of the series of Data packets. Alternatively, an empty packet may be sent in stead of the AckReq packet. Furthermore, any packet may be sent for detecting the end of the series of Data packets as long as the packet is distinguishable from Data packets or other control packets.

As such, according to the present embodiment, effects similar to those described in the first embodiment can be obtained.

In the first embodiment, the receiving station determines, based on detection of the non-transmission time β longer than the non-transmission time α, that reception of the series of data packets has been completed . In the third embodiment, on the other hand, the transmitting station sends a series of data packets and then a response request packet. On receiving the response request packet, the receiving station determines that reception of the series of data packets has been completed, and then sends a response packet.

If completion of receiving the series of data packets is detected based on the non-transmission period as in the first embodiment, more data packets are transmittable, and therefore higher transmission efficiency can be achieved, compared with a case where such completion is detected based on the response request packet as in the third embodiment.

**Claims**

1. A communication method for carrying out communications among plural stations by using a single wireless channel which is shared by the plural stations in a time-division manner, the method comprising:

   a step (S302), carried out by a pair of stations included in the plural stations that has data to be sent and received, of determining whether the wireless channel is in use;
   a step (S304), carried out by the pair of stations, of obtaining, when the wireless channel is not in use, permission for the communications via the wireless channel in a specific time period P, and serving as a transmitting station and a receiving station;
   a step (S306), carried out by the transmitting station, of calculating the number of data packets transmittable in the specified time period P;
   a step (S307 through S309), carried out by the transmitting station, of successively sending to the receiving station a series of data packets not more than the calculated number of data packets;
   a step (S314), carried out by the receiving station, of starting reception of the series of data packets coming from the transmitting station;
   a step (S317), carried out by the receiving station, of sending a response packet to the transmitting station when completing the reception of the series of data packets; and
   a step, carried out by the transmitting station and the receiving station when determining that no data to be transmitted has been left in the transmitting station, of withdrawing the permission for the communications provided to the transmitting station and the receiving station even before the specified time period P passes, whereby
   the transmitting station sends the series of data packets (Fig. 11; 203 through 205) at intervals of a non-transmission time α (217 through 219), and
   when detecting a non-transmission time β (220) longer than the non-transmission time α, the receiving station determines that the series of data packets has been received.

2. The communications method according to claim 1, further comprising:

   the transmitting station sends a response request packet (205a) to the receiving station after the series of data packets (Fig. 16; 203 and 204) has been sent, and
   the receiving station determines, based on the response request packet received from the transmitting station, that the series of data packets has been received.

3. The communications method according to claim 2, wherein
   after transmitting the response packet (207) and when detecting a non-transmission time γ (221) longer than the non-transmission time α (220a), the receiving station determines that no data to be transmitted has been left in the transmitting station, and withdraws the permission for the communications provided to the receiving station.

4. The communications method according to claim 1, wherein
after transmitting the response packet (207) and when detecting a non-transmission time $\gamma$ (221) longer than the non-transmission time $\beta$ (220), the receiving station determines that no data to be transmitted has been left in the transmitting station, and withdraws the permission for the communications provided to the receiving station.

**Patentansprüche**

1. Kommunikationsverfahren zum Ausführen von Kommunikation zwischen mehreren Stationen durch die Verwendung von einem einzelnen drahtlosen Kanal, der von den mehreren Stationen im Zeitmultiplex-Verfahren gemeinsam genutzt wird, wobei das Verfahren Folgendes umfasst:

einen Arbeitsschritt (S 302), der von einem Paar von Stationen ausgeführt wird, die in den mehreren Stationen eingeschlossen sind, welche zu sendende und zu empfangene Daten haben, zum Bestimmen, ob sich der drahtlose Kanal in Benutzung befindet;
einen Arbeitsschritt (S 304), der von dem Paar von Stationen ausgeführt wird, zum Erzielen - wenn der drahtlose Kanal nicht verwendet wird - der Erlaubnis für die Kommunikation über den drahtlosen Kanal in einer bestimmten Zeitspanne P, und zum Fungieren als eine Übertragungsstation und eine Empfangsstation;
einen Arbeitsschritt (S 306), der von der Übertragungsstation ausgeführt wird, zum Berechnen der Anzahl von Datenpaketen, die in der bestimmten Zeitspanne P übertragbar sind;
einen Arbeitsschritt (S 307 bis S 309), der von der Übertragungsstation ausgeführt wird, um zu der Empfangsstation nacheinander eine Reihe von Datenpaketen zu senden, nicht mehr als die berechnete Anzahl von Datenpaketen;
einen Arbeitsschritt (S 314), der von der Empfangsstation ausgeführt wird, zum Beginnen des Empfangs der Reihe von Datenpaketen, die von der Übertragungsstation gesendet werden;
einen Arbeitsschritt (S 317), der von der Empfangsstation ausgeführt wird, zum Senden eines Antwortpakets zu der Übertragungsstation, wenn der Empfang der Reihe von Datenpaketen abgeschlossen ist; und
einen Arbeitsschritt, der von der Übertragungsstation und der Empfangsstation ausgeführt wird, wenn bestimmt wird, dass keine zu übertragenden Daten in der Übertragungsstation übriggeblieben sind, zum Widerrufen der Erlaubnis für die Kommunikation, die der Übertragungsstation und der Empfangsstation bereitgestellt wurde, auch bevor die bestimmte Zeitspanne P vergangen ist, wobei
die Übertragungsstation die Reihe von Datenpaketen (Figur 11; 203 bis 205) in Intervallen einer Nicht-Übertragungszeit $\alpha$ sendet (217 bis 219), und
wenn erfasst wird, dass eine Nicht-Übertragungszeit $\beta$ (220) länger als die Nicht-Übertragungszeit $\alpha$ ist, die Empfangsstation bestimmt, dass die Reihe von Datenpaketen empfangen wurde.

2. Kommunikationsverfahren nach Anspruch 1, ferner Folgendes umfassend:

die Übertragungsstation sendet ein Antwort-Anforderungspaket (205 a) zu der Empfangsstation, nachdem die Reihe von Datenpaketen (Figur 16; 203 und 204) gesendet wurde; und
die Empfangsstation bestimmt, basierend auf dem von der Übertragungsstation gesendeten Antwort-Anforderungspaket, dass die Reihe von Datenpaketen empfangen wurde.

3. Kommunikationsverfahren nah Anspruch 2, wobei
nach dem Übertragen des Antwortpakets (207) und wenn erfasst wurde, dass eine Nicht-Übertragungszeit $\gamma$ (221) länger als die Nicht-Übertragungszeit $\alpha$ (220 a) ist, die Empfangstation bestimmt, dass keine zu übertragenden Daten in der Übertragungsstation übriggeblieben sind, und die Erlaubnis für die Kommunikation, die der Empfangsstation bereitgestellt wurde, widerruft.

4. Kommunikationsverfahren nah Anspruch 1, wobei
nach dem Übertragen des Antwortpakets (207) und wenn erfasst wurde, dass eine Nicht-Übertragungszeit $\gamma$ (221) länger als die Nicht-Übertragungszeit $\beta$ (220 a) ist, die Empfangstation bestimmt, dass keine zu übertragenden Daten in der Übertragungsstation übriggeblieben sind, und die Erlaubnis für die Kommunikation, die der Empfangsstation bereitgestellt wurde, widerruft.

**Revendications**

1. Procédé de communication pour exécuter des communications entre plusieurs stations en utilisant un seul canal sans fil qui est partagé par la pluralité de stations selon une technique de répartition dans le temps, le procédé comprenant;

   une étape (S302), exécutée par une paire de stations comprises dans la pluralité de stations qui ont des données à envoyer et à recevoir, consistant à déterminer si le canal sans fil est en cours d'utilisation;

   une étape (S304), exécutée par la paire de stations, consistant à obtenir, lorsque le canal sans fil n'est pas en cours d'utilisation, la permission pour les communications à travers le canal sans fil dans une période de temps P spécifique, et qui font office de station de transmission et de station de réception;

   une étape (S306), exécutée par la station de transmission, consistant à calculer le nombre de paquets de données pouvant être transmis dans la période de temps P spécifiée;

   une étape (S307 à S309), exécutée par la station de transmission, consistant à envoyer de manière successive à la station de réception une série de paquets de données dont le nombre ne dépasse pas le nombre de paquets de données calculé;

   une étape (S314), exécutée par la station de réception, consistant à entamer la réception de la série de paquets de données provenant de la station de transmission;

   une étape (S317), exécutée par la station de réception, consistant à envoyer un paquet de réponses à la station de transmission lors de l'achèvement de la réception de la série de paquets de données; et

   une étape, exécutée par la station de transmission et par la station de réception en déterminant qu'aucune donnée à transmettre n'est restée dans la station de transmission, consistant à retirer la permission pour les communications fournie à la station de transmission et à la station de réception même avant que la période de temps P spécifiée ne s'écoule, de sorte que

   la station de transmission envoie la série de paquets de données (Fig. 11; 203 à 205) à des intervalles d'un temps de non-transmission α (217 à 219), et

   en détectant un temps de non-transmission β (220) plus long que le temps de non-transmission α, la station de réception détermine que la série de paquets de données a été reçue.

2. Procédé de communications selon la revendication 1, comprenant en plus:

   la station de transmission envoie un paquet de demande de réponse (205a) à la station de réception après que la série de paquets de données (Fig. 16; 203 et 204) a été envoyée, et

   la station de réception détermine, sur la base du paquet de demande de réponse reçu de la station de transmission, que la série de paquets de données a été reçue.

3. Procédé de communications selon la revendication 2, dans lequel

   après avoir transmis le paquet de réponse (207) et en détectant un temps de non-transmission γ (221) plus long que le temps de non-transmission α (220a), la station de réception détermine qu'aucune donnée à transmettre n'est restée dans la station de transmission, et retire la permission pour les communications fournie à la station de réception.

4. Procédé de communications selon la revendication 1, dans lequel

   après avoir transmis le paquet de réponse (207) et en détectant un temps de non-transmission γ (221) plus long que le temps de non-transmission β (220), la station de réception détermine qu'aucune donnée à transmettre n'est restée dans la station de transmission, et retire la permission pour les communications fournie à la station de réception.

EP 1 615 385 B1

F I G. 1

```
        WIRELESS
        STATION      ~1
        (CONTROL
        STATION)
```

2        3        4

```
WIRELESS    WIRELESS    WIRELESS
STATION     STATION     STATION
```

F I G. 2

1～4

```
CONTROL SECTION    14

        CPU      21

ROM        RAM

22         23
```

```
TRANSMITTING/         11
RECEIVING SECTION

PACKET PROCESSING     12
SECTION

STORAGE SECTION       13
```

22

F I G.  3

### (a)

22

COMMUNICATIONS PROGRAM — 31

POLLING PROGRAM — 32

ROM IN CONTROL STATION

### (b)

22

COMMUNICATIONS PROGRAM — 31

ROM IN WIRELESS STATION

# F I G. 4

```
                    ( START )
                        │
        ┌───────────────────────────────┐
        │      READ POLLING LIST         │──S101
        └───────────────────────────────┘
                        │
                    ╱───────╲
                   ╱ POLLING ╲         S102
                 ╱ ACCESS PERIOD ╲────────── N ──►
                   ╲  STARTED   ╱
                     ╲    ?   ╱
                       ╲───╱
                        │ Y
        ┌───────────────────────────────┐
        │      SEND Beacon PACKET        │──S103
        └───────────────────────────────┘
                        │
        ┌───────────────────────────────┐
        │ REFER TO POLLING LIST TO SELECT PAIR │──S104
        │ OF TRANSMITTING STATION AND RECEIVING │
        │ STATION AND PROVIDE PAIR WITH  │
        │ PERMISSION FOR COMMUNICATIONS  │
        └───────────────────────────────┘
                        │
        ┌───────────────────────────────┐
        │     SEND CF-Multipoll PACKET   │──S105
        └───────────────────────────────┘
                        │
                    ╱───────╲
                   ╱  NON-TRANSMISSION ╲   S106
         N ◄──── ╱ PERIOD τ (>α) DETECTED ╲
                   ╲        ?        ╱
                     ╲───────────╱
                        │ Y
        ┌───────────────────────────────┐
        │     PROHIBIT PERMISSION FOR    │──S107
        │        COMMUNICATIONS          │
        └───────────────────────────────┘
                        │
                    ╱───────╲
                   ╱ POLLING ╲           S108
         N ◄──── ╱ ACCESS PERIOD HAS ENDED ╲
                   ╲       ?      ╱
                     ╲─────────╱
                        │ Y
        ┌───────────────────────────────┐
        │      SEND CF-End PACKET        │──S109
        └───────────────────────────────┘
                        │
                    ╱───────╲
                   ╱ CONTINUE ╲──── Y ──►     S110
                     ╲   ?   ╱
                       ╲───╱
                        │ N
                    (  END  )
```

# F I G. 5

| PRIORITY LEVEL | DATA TRANSMITTING STATION | DATA RECEIVING STATION |
|---|---|---|
| 1 | WIRELESS STATION 2 | WIRELESS STATION 3 |
| 2 | CONTROL STATION 1 | WIRELESS STATION 3 |
| 3 | WIRELESS STATION 3 | CONTROL STATION 1 |
| 4 | WIRELESS STATION 4 | CONTROL STATION 1 |
| 5 | CONTROL STATION 1 | WIRELESS STATION 2 |
| 6 | CONTROL STATION 1 | WIRELESS STATION 4 |

# F I G. 6

41    42    43

CF-Multipoll PACKET

| DESTINATION | PERMISSION FOR COMMUNICATIONS | TIME |

SPECIFIED TIME ALLOWABLE FOR COMMUNICATION (P)

PERMISSION FOR Data PACKET TRANSMISSION PROVIDED TO TRANSMITTING STATION
PERMISSION FOR DelayAck PACKET TRANSMISSION PROVIDED TO RECEIVING STATION

IDENTIFIER OF TRANSMITTING STATION
IDENTIFIER OF RECEIVING STATION

# F I G. 7

51    52

DelayAck PACKET

| DESTINATION | STATE OF RECEPTION |

STATE OF RECEPTION OF SERIES OF Data PACKETS RECEIVED BEFORE CF-Multipoll PACKET COMES

IDENTIFIER OF TRANSMITTING STATION

# F I G. 8

```
                    ┌─────────┐
                    │  START  │
                    └─────────┘
                         │
         ┌───────────────┤
         │    ┌──────────────────────────┐
         │    │ OPERATE IN RANDOM ACCESS │──S201
         │    │ MODE                     │
         │    └──────────────────────────┘
         │               │
         │          ╱─────────────╲
         │    N    ╱ Beacon PACKET  ╲  S202
         ├────────< RECEIVED ?       >
         │         ╲                ╱
         │          ╲─────────────╱
         │               │ Y
         │    ┌──────────────────────────┐
         │    │ GOES TO POLLING ACCESS   │──S203
         │    │ MODE                     │
         │    └──────────────────────────┘
         │               │
         │    ┌──────────────────────────┐
         │    │ RECEIVE CF-Multipoll     │──S204
         │    │ PACKET                   │
         │    └──────────────────────────┘
```

- OPERATE IN RANDOM ACCESS MODE — S201
- Beacon PACKET RECEIVED ? — S202 (N, Y)
- GOES TO POLLING ACCESS MODE — S203
- RECEIVE CF-Multipoll PACKET — S204
- PERMISSION FOR Data PACKET TRANSMISSION PROVIDED ? — S205 (Y / N)
- CALCULATE THE NUMBER OF Data PACKETS TRANSMITTABLE DURING SPECIFIED TIME PERIOD P — S206
- START Data PACKET TRANSMISSION — S207
- THE NUMBER OF Data PACKETS TRANSMITTED REACHES CALCULATED NUMBER ? — S208 (N / Y)
- STOP Data PACKET TRANSMISSION — S209
- RECEIVE DelayAck PACKET — S210
- PERMISSION FOR DelayAck PACKET TRANSMISSION PROVIDED ? — S211 (Y / N)
- START RECEIVING SERIES OF Data PACKETS SUCCESSIVELY SENT AT INTERVALS OF NON-TRANSMISSION TIME $\alpha$ — S212
- NON-TRANSMISSION TIME $\beta$ ($>\alpha$) DETECTED ? — S213 (N / Y)
- STOP RECEIVING Data PACKETS — S214
- SEND DelayAck PACKET — S215
- CF-End PACKET RECEIVED ? — S216 (N / Y)
- CONTINUE ? — S217 (Y / N)
- END

# FIG. 9

S201

S301 DATA TO BE SENT EXIST ? — N

Y

S302 WIRELESS CIRCUIT IN USE ? — Y

N

S303 SEND RTS PACKET IN RANDOM TIMING

S304 RECEIVE CTS PACKET (OBTAIN PERMISSION FOR COMMUNICATION)

S305 SEND CF-Multipoll PACKET

S306 CALCULATE THE NUMBER OF Data PACKETS TRANSMITTABLE DURING SPECIFIED TIME PERIOD P

S307 START Data PACKET TRANSMISSION

S308 THE NUMBER OF Data PACKETS TRANSMITTED REACHES CALCULATED NUMBER ? — N

Y

S309 STOP Data PACKET TRANSMISSION

S310 RECEIVE DelayAck PACKET (LOSE PERMISSION FOR COMMUNICATION)

S311 RTS PACKET RECEIVED ? — N

Y

S312 SEND CTS PACKET

S313 RECEIVE CF-Multipoll PACKET

S314 START RECEIVING SERIES OF Data PACKETS SUCCESSIVELY SENT AT INTERVALS OF NON-TRANSMISSION TIME α

S315 NON-TRANSMISSION TIME $\beta (>\alpha)$ DETECTED ? — N

Y

S316 STOP Data PACKET RECEPTION

S317 SEND DelayAck PACKET

TO S202

# FIG. 10

PREDETERMINED PERIOD 126

# F I G. 1 1

F I G. 1 2

WIRELESS STATION 1

WIRELESS STATION 2

WIRELESS STATION 3

WIRELESS STATION 4

## F I G. 1 3

```
                    ( START )
                        │
        ┌───────────────▼────────────────┐
        │  │ OPERATE IN RANDOM ACCESS   │ │──S201a
        │  │ MODE                       │ │
        │  └────────────────────────────┘ │
        │               │                  │
        │          ◇ S202                   │
        │      Beacon PACKET                │
     N ◀──── RECEIVED ?                     │
        │          │ Y                      │
        │  ┌────────▼──────────────┐        │
        │  │ GOES TO POLLING ACCESS MODE│──S203
        │  └───────────────────────┘        │
        │          │                        │
```

START

OPERATE IN RANDOM ACCESS MODE — S201a

Beacon PACKET RECEIVED ? — S202
N

GOES TO POLLING ACCESS MODE — S203

RECEIVE CF-Multipoll PACKET — S204

PERMISSION FOR Data PACKET TRANSMISSION PROVIDED ? — S205
N

Y

CALCULATE THE NUMBER OF Data PACKETS TRANSMITTABLE DURING SPECIFIED TIME PERIOD P — S206

START Data PACKET TRANSMISSION — S207

THE NUMBER OF Data PACKETS TRANSMITTED REACHES CALCULATED NUMBER ? — S208
N

Y

STOP Data PACKET TRANSMISSION — S209

SEND AckReq PACKET — S209a

RECEIVE DelayAck PACKET — S210

PERMISSION FOR DelayAck PACKET TRANSMISSION PROVIDED ? — S211
N

Y

START RECEIVING SERIES OF Data PACKETS SUCCESSIVELY SENT AT INTERVALS OF NON-TRANSMISSION TIME $\alpha$ — S212

AckReq PACKET RECEIVED ? — S213a
N

Y

STOP RECEIVING Data PACKETS — S214

SEND DelayAck PACKET — S215

CF-End PACKET RECEIVED ? — S216
N

Y

CONTINUE ? — S217
Y

N

END

# FIG. 14

```
        ( S201a )
            │
         ╱─────────╲  ┌S301
        ╱  DATA TO BE ╲────────────────────────────────┐
        ╲  SENT EXIST ?╱  N                             │
         ╲───────────╱                                  │
            │ Y                                         ▼
         ╱─────────╲  ┌S302                      ╱──────────╲  ┌S311
     ┌──╱ WIRELESS CIRCUIT ╲               ┌────╱  RTS PACKET ╲────────┐
     │  ╲    IN USE ?      ╱               │    ╲  RECEIVED ?  ╱  N     │
   Y │   ╲──────────╱                      │     ╲──────────╱          │
     │       │ N                           │         │ Y      ┌S312    │
     │  ┌──────────────────────┐ ┌S303     │  ┌──────────────────────┐ │
     │  │ SEND RTS PACKET IN RANDOM│       │  │   SEND CTS PACKET     │ │
     │  │ TIMING                   │       │  └──────────────────────┘ │
     │  └──────────────────────┘          │         │        ┌S313    │
     │       │                             │  ┌──────────────────────┐ │
     │  ┌──────────────────────┐ ┌S304     │  │ RECEIVE CF-Multipoll PACKET│
     │  │  RECEIVE CTS PACKET   │           │  └──────────────────────┘ │
     │  └──────────────────────┘          │         │        ┌S314    │
     │       │                             │  ┌──────────────────────┐ │
     │  ┌──────────────────────┐ ┌S305     │  │ START RECEIVING SERIES OF Data│
     │  │ SEND CF-Multipoll PACKET│        │  │ PACKETS SUCCESSIVELY SENT AT│
     │  └──────────────────────┘          │  │ INTERVALS OF NON-TRANSMISSION│
     │       │                             │  │ TIME α                 │
     │  ┌──────────────────────┐ ┌S306     │  └──────────────────────┘ │
     │  │ CALCULATE THE NUMBER OF Data│    │         │                  │
     │  │ PACKETS TRANSMITTABLE DURING│    │        ╱──────────╲  ┌S315a │
     │  │ SPECIFIED TIME PERIOD P │        └───────╱ AckReq PACKET ╲────┤
     │  └──────────────────────┘          N       ╲  RECEIVED ?  ╱     │
     │       │                                     ╲──────────╱        │
     │  ┌──────────────────────┐ ┌S307                 │ Y     ┌S316   │
     │  │ START Data PACKET TRANSMISSION│         ┌──────────────────────┐│
     │  └──────────────────────┘               │ STOP Data PACKET RECEPTION││
     │       │                                  └──────────────────────┘ │
     │   ╱─────────╲  ┌S308                          │        ┌S317      │
     │  ╱    THE     ╲                         ┌──────────────────────┐  │
  ┌──│ ╱  NUMBER OF    ╲                       │ SEND DelayAck PACKET  │  │
  │  │ ╲ Data PACKETS TRANSMITTED ╱            └──────────────────────┘  │
  │  N  ╲ REACHES CALCULATED ╱                       │                   │
  │   ╲   NUMBER ?   ╱                               │                   │
  │    ╲──────────╱                                  │                   │
  │       │ Y                                        │                   │
  │  ┌──────────────────────┐ ┌S309                  │                   │
  │  │ STOP Data PACKET TRANSMISSION│                │                   │
  │  └──────────────────────┘                        │                   │
  │       │                                          │                   │
  │  ┌──────────────────────┐ ┌S309a                 │                   │
  │  │  SEND AckReq PACKET   │                        │                   │
  │  └──────────────────────┘                        │                   │
  │       │                                          │                   │
  │  ┌──────────────────────┐ ┌S310                  │                   │
  │  │ RECEIVE DelayAck PACKET│                       │                   │
  │  └──────────────────────┘                        │                   │
  │       │◄─────────────────────────────────────────┴───────────────────┘
  └───────┤
        ( TO S202 )
```

# F I G. 1 5

EP 1 615 385 B1

F I G. 1 7

## FIG. 18

601  602  603  604  605  606

| Busy Medium | RTS | CTS | Data | ACK | Data | ACK | Busy Medium |

TIME-OUT PERIOD 607

F I G. 1 9

FIG. 20

EP 1 615 385 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0768806 A
- EP 0899920 A
- EP 0818905 A
- EP 0328100 A2